# EUROPÄISCHE PATENTSCHRIFT

(11) **EP 3 580 125 B1**
(45) Veröffentlichungstag und Bekanntmachung des Hinweises auf die Patenterteilung: **17.11.2021**
(21) Anmeldenummer: 18706218.7
(22) Anmeldetag: 08.02.2018
(51) Int. Cl.: B64G 1/10, B64G 1/24

(54) **FORMATIONSFÄHIGER KLEINSTSATELLIT UND FORMATION AUS MEHREREN KLEINSTSATELLITEN**
SMALL SATELLITE SUITABLE FOR FYLING IN A FORMATION AND FORMATION THEREOF
PETIT SATELLITE CAPABLE D'EVOLUER EN FORMATION ET FORMATION CONSITUEE DE CEUX-CI

(30) Priorität: 08.02.2017 DE 102017102481
(43) Veröffentlichungstag der Anmeldung: 18.12.2019
(73) Patentinhaber: Schilling, Klaus, 97082 Würzburg (DE)
(72) Erfinder: Schilling, Klaus, 97082 Würzburg (DE)
(74) Vertreter: Spachmann, Holger
(86) Internationale Anmeldenummer: PCT/EP2018/053218
(87) Internationale Veröffentlichungsnummer: WO 2018/146220

(56) Entgegenhaltungen:
- DE-A1-102007 030 944
- US-A- 6 089 510
- US-A1- 2007 295 865
- US-A1- 2009 222 152
- US-A1- 2010 032 528
- US-A1- 2013 292 517
- E.F. Jochim ET AL: "Fuel consumption and collision avoidance strategy in multi-static orbit formations", ACTA ASTRONAUTICA, vol. 68, no. 7-8, 1 April 2011 (2011-04-01), pages 1002-1014, XP055581077, GB ISSN: 0094-5765, DOI: 10.1016/j.actaastro.2010.09.011

## Beschreibung

Die Erfindung betrifft einen formationsfähigen Kleinstsatelliten, insbesondere einen Nano- oder Picosatellit mit einem Massengewicht von 10 kg oder weniger für LEO-Anwendungen (Low Earth Orbit) sowie eine Formation mehrerer Kleinstsatelliten nach den unabhängigen Ansprüchen.

### STAND DER TECHNIK

Seit 1957 sind mit dem Start des Sputnik-1-Satelliten Kleinsatelliten mit einem Gewicht von ungefähr 80kg im Stand der Technik bekannt. Aufgrund einer rasanten Entwicklung der Technologie ist es heutzutage möglich, Kleinstsatelliten mit einem Startgewicht unter 10 kg, bevorzugt mit einem Startgewicht unter 2 kg zur Verfügung zu stellen, die in einer niedrigen Erdumlaufbahn, dem sogenannten Low Earth Orbit (LEO) um die Erde kreisen können, in einer Höhe von circa 200 km bis maximal 1000 km.

Es zeichnen sich weiterhin in der Raumfahrttechnik Tendenzen ab, dass traditionelle Groß-Satelliten durch Satelliten-Konstellationen verteilter KleinSatelliten ergänzt werden. Diese werden in derartigen niedrigen Erdumlaufbahnen mit höherer Inklination platziert, um so Satellitensysteme mit weltweiter Überdeckung und geringen Latenzzeiten zu realisieren. Insbesondere in Nähe der Pole kommt es so durch die vorgegebene Bahnmechanik zu besonders hohen Konzentrationen von Satelliten, die Ausweichreaktionen in Echtzeit benötigen um Kollisionen zu vermeiden. Die große Menge bereits vorhandener nicht mehr funktionsfähiger Objekte aus der Frühzeit der Raumfahrt in Kombination mit den hohen Stückzahlen moderner verteilter Satellitensysteme erfordert neuartige Problemansätze, um einen sicheren Betrieb im Orbit zu garantieren, die hier patentiert werden sollen.

LEO-Bahnen sind durch kostengünstige Trägersysteme zu erreichen, wobei die Relativgeschwindigkeit der Satelliten gegenüber der Erde zur Überwindung der Zentralkraft relativ hoch ist und sie somit eine hohe Umlauffrequenz von ungefähr 100 min für einen Umlauf um die Erde aufweisen. Dabei sind eine Horizontsichtbarkeit und damit ein Funkkontakt zu einer Bodenstation für maximal 15 min gegeben. Gattungsgemäße LEO-Kleinstsatelliten werden insbesondere als Erderkundungs- oder Wettersatelliten, als Funkübertragungssatelliten bzw. im Einsatz in einem globalen Kommunikationssatellitensystem oder als Forschungs- und Technologiesatelliten eingesetzt. Auch können derartige Satelliten Spionagetätigkeiten zur militärischen Verwendung oder zur lokalen Analyse der Erdoberfläche, beispielsweise nach Umweltgeschehen wie Stürmen, Überschwemmungen oder Kriegseinwirkungen, eingesetzt werden.

Bei LEO-Satelliten-Formationen werden meist mehrere Satelliten in einem kreisförmigen Orbit an verschiedenen Stellen eingesetzt und nutzen Symmetrie-Eigenschaften. Es können mehrere gegeneinander versetzte Orbitebenen mit mehreren Satelliten besetzt sein. Insbesondere die Walker-Konstellationen werden hier sehr häufig eingesetzt. Die meist verwendeten polaren Umlaufbahnen schneiden sich in der Nähe der Polkappen, wobei so in der Umgebung der Polkappen eine besonders hohe Kollisionsgefahr von sich begegnenden Satelliten der einzelnen Orbitebenen entsteht. Jede Orbitebene kann mit einem oder auch mehreren Satelliten besetzt sein. Insbesondere für Kommunikationssysteme ist eine solche Satellitenkonstellation mit Orbits, die durch eine Inklination zwischen 50° und 100°charakterisiert sind, interessant (oft als Walker-Delta-Konstellation realisiert). Daneben können hochelliptische Konstellationen eingerichtet werden, bei denen der Satellit nur in einem Teilbereich seiner Orbitalbahn erdnah und in weiteren Bereichen erdfern ist, und dabei eine lange Orbitallebensdauer erreichen kann.

In jüngster Zeit werden vermehrt Satellitenkonstellationen für den LEO-Einsatz vorgeschlagen, wobei diese, sofern der Satellit mit einem konstanten Abstand in dieselbe Richtung fliegt, als Satellitenformation bezeichnet werden. In vielen Fällen wird die Satellitenkonstellation zur globalen Abdeckung, zum Beispiel für eine Satellitennavigation oder -kommunikation genutzt, in anderen Fällen auch für eine lokale Abdeckung, beispielsweise in Form eines eng benachbarten Schwarms von Kleinstsatelliten, die in einer Formation interessante Gebiete der Erdoberfläche kartografieren und beobachten können. Somit können ganzheitliche Erdoberflächen durch eine Satellitenformation ausgeleuchtet werden oder lokal eine hohe Dichte der Ausleuchtung eng begrenzter Gebiete durch mehrere Satelliten erreicht werden.

Kleinstsatelliten lassen sich einfach in Serienproduktion bauen, sind somit kostengünstig und können in Kombination mit anderen Satelliten oder Nutzlasten mit einem einzigen Trägersystem in den Orbit geschossen werden. Ende der Neunzigerjahre wurde durch die Definition der CubeSat Design Specification eine eigene Klasse von Pico- oder Nanosatelliten mit einem Startgewicht unter 10 kg definiert, die für vielfältige Einsatzzwecke nutzbar sind. Miniaturisierung, Energieeffizienz, modularer Aufbau und zunehmende Autonomie dieser Satellitensysteme spielen dabei eine wichtige Rolle und werden fortlaufend verbessert.

Allerdings ist begrenzt durch die geringe Energiebereitstellung und die geringe Kapazität, Treibstoff für eine Eigenmanövrierfähigkeit in Satelliten zu integrieren, technologisch enge Grenzen bezüglich der Leistungsfähigkeit und der Manövrierbarkeit eines Kleinstsatelliten in einer Satellitenformation gegeben. Auch ist ein kritischer Punkt die Lebensdauer derartiger Kleinstsatelliten, da redundante Systeme in diesen Satelliten oft aufgrund des Gewichts nicht vorgesehen werden können, und somit hohe Ausfallraten zu verzeichnen sind. Insbesondere ein Ausfall durch Treibstoffmangel oder durch Strahlenschäden, da die Satelliten der harten Strahlung des Weltraums ausgesetzt sind, sind kritische Faktoren, da ein effektiver, konventioneller Strahlenschutz, beispielsweise durch Abschirmung oder schwere Bleiplatten, bei Kleinstsatelliten vermieden werden soll. Gerade bei Satelliten unterhalb von 2 kg bis zu 1 kg und darunter können redundante Systeme nicht verbaut werden, so dass auf einer einzelnen Schaltungsplatine in der Regel nur ein Funktionssystem untergebracht werden kann.

In jüngster Zeit hat sich durch die Zunahme von Weltraumschrott, aber auch bei Satellitenformationen, insbesondere bei einer polaren Satellitenkonstellation die Dringlichkeit nach Kollisionsvermeidungsstrategien bei Kleinstsatelliten gezeigt. Die Ausfallraten bei Kollision mit Fremdkörpern, sei es Weltraumschrott, seien es mit Fremdsatelliten oder seien es Eigensatelliten in derselben Formation ist in jüngster Zeit beträchtlich gestiegen. Bisher wurden im Orbit für verteilte Multi-Satellitensysteme fast ausschließlich Konstellationen realisiert, bei denen jeder Satellit individuell von der Bodenstation aus gesteuert wird. Auch eventuell im Wege befindliche Objekte werden von der Bodenstation aus detektiert und in die Wegeplanung mit einbezogen. Allerdings besteht für etwa 90 % einer Umlaufdauer gar kein Kontakt zu der Bodenstation, insofern müssen bei Konstellationen entsprechende Abschnitte der Umlaufbahn vorausgeplant werden. Bei der zu erwartenden stark anwachsenden Zahl der Objekte wird dies so nicht mehr durchführbar sein. Für kürzere Reaktionszeiten hinsichtlich Ausweichmanövern sind direkt im Orbit mit dem Borddatenverarbeitungssystem entsprechende Ansätze zu realisieren, um Relativabstände zu anderen - kooperativen und nicht-kooperativen - Objekten vom Satelliten aus zu bestimmen und dann autonom -gegebenenfalls in Abstimmung mit den kooperierenden Objekteneine Strategie zur Vermeidung von Zusammenstößen umzusetzen. Daher besteht die dringende Notwendigkeit, Kleinstsatelliten, insbesondere bei der zunehmenden Dichte an Satelliten in LEO-Formationen mit der Fähigkeit einer Relativnavigation und eine Kollisionsvermeidungsstrategie zu entwickeln.

Daneben besteht die Notwendigkeit, Kleinstsatelliten mit einem flexiblen Hardwaredesign zum Einsatz unterschiedlicher Aufgabenstellungen bereitzustellen, die eine hohe Verlässlichkeit und Lebensdauer aufweisen können.

Daneben soll die Testbarkeit derartiger Satelliten, insbesondere in einer Serienfertigung, vereinfacht werden und eine Standardisierung des Hardwaredesigns, insbesondere der Grundausstattung der Kleinstsatelliten, erreicht werden, um Fertigungskosten und -zeiten senken zu können.

Schließlich soll eine hohe Fehlertoleranz und Robustheit gegen strahlungsbedingten Ausfall und Fehlfunktion erreicht werden, und ein energieeffizientes Design für die zunehmenden Aufgaben der Kleinstsatelliten bei weiterhin beschränkten Energieressourcen zur Verfügung gestellt werden.

Die JP H07 - 89 497 A zeigt einen Satelliten mit einer Kollisionsvermeidungsvorrichtung. Durch eine Kollisionsvermeidungsvorrichtung kann eine Kollision mit einem Flugkörper vermeidet werden6. Die Kollisionsvermeidungsvorrichtung umfasst einen mikrowellenbasierten eindimensionaler Distanzsensor zur Erfassung eines skalaren Abstandes zwischen einem Satelliten und Flugkörper, außerdem ist in eine Kollisionsprädiktionseinrichtung zur Bestimmung eines möglichen Kollisionsrisikos und eine Ausweicheinrichtung zur Steuerung des Antriebssystems beschrieben. Allerdings ist keine adaptive Kollisionserkennung beschrieben, da lediglich ein Abstand zum Flugkörper gemessen werden kann, aber keine Richtung vom Satelliten zum Flugkörper bestimmbar ist und somit kein Hinweis auf eine Flugtrajektorie des Flugkörpers geben ist, wodurch keine energieeffiziente Ausweichstrategie erreicht werden kann. So kann bei einem Parallelflug, wie er bei Satellitenschwärmen angedacht ist, eine rein distanzbasierte Kollisionsvermeidung zu unvorhersehbaren Bewegungen, hoher Energieverschwendung und Auflösung der Gesamtformation führen. Denn es muss für insbesondere für Kleinstsatelliten mit einem begrenzten Treibstoffvorrat zusätzlich zu dem Abstand auch noch die Richtung zu dem Objekt bekannt sein, um Ausweichmanöver energieeffizient fliegen zu können. Auch weist diese Druckschrift nicht darauf hin, wie eine derartige Kollisionsvermeidungsvorrichtung in einem Kleinstsatelliten, insbesondere in einem schwarmfähigen Kleinstsatelliten effizient implementiert werden könnte, und wie ein Schwarm aus Satelliten rein auf einer distanzbasierten Kollisionsvermeidungsstrategie ausgebildet werden könnte, die gegenseitig in Abhängigkeit stehen.

Die EP 3 095 713 beschriebt eine Geräteträgertafel eines Satelliten, die Lageregelungssysteme, Tanks und/oder Funksysteme beinhalten kann. Jedes Panel ist mit einem Mainbus einschließlich elektrischer Stromregeleinrichtung und Solarzellenstromkonverter ausgerüstet. Darüber hinaus sind sogenannte ARINC-Stecker als elektrische Verbindungungsstecksysteme der Panels vorgesehen. Dabei ist zumindest keine getrennte und spezifische Zuordnung einzelner Funktionen des Satelliten zu spezifischen Platinen erkennbar, auch sind weiterhin Kabel vorhanden.

In der DE 20 2005 015 431 U1 ist ein Reaktionsrad für Mikrosatelliten dargestellt, das eine Einheit aus einem Magnetrotor und einer Schwungmasse umfasst. Dabei wird keine Kombination zur Relativlagenkontrolle durch eine Kombination von Magnetfeldspulen beschrieben, des Weiteren ist eine für eine Lageausrichtung notwendige Sensorik, wie beispielsweise Gyroskopen, Stern- oder Sonnensensor nicht dargestellt, so dass unklar ist, inwieweit ein Reaktionsrad bei einer Relativlagenkontrolle und ohne Zusammenspiel mit weiteren Antriebsaktoren wie Magnetfeldspulen (zur Sättigungsfelderzeugung) und Triebwerk und Sensoren für eine energieeffiziente Gesamtkontrolle von Lage und Bewegungsrichtung gezielt eingesetzt werden könnte.

Ein elektrisches Antriebssystem für einen Mikrosatellit ist in der EP 0 903 487 A2 gezeigt. Ein elektrisches Widerstandselement ist benachbart zu oder innerhalb einer Kammer angeordnet. Wenn ein Fluid in die Kammer eingebracht wird, dehnt sich das Fluid wegen der thermische Energie, die von einem elektrischen Widerstandselement erzeugt ist, aus, so dass hiermit ein Gasemissionsantrieb bzw. ein Lichtbogenantrieb umgesetzt ist. Wenn der Druck in der Kammer auf einen bestimmten Druck steigt, reißt die Membran, wodurch das Fluid aus der Kammer herausfließt, so dass der Antrieb wohl für einen einmaligen Einsatz, aber nicht für eine wiederholte Lagesteuerung eingesetzt werden kann. Bei diesem Mikroantriebssystem wird durch Erhitzung der Druck erhöht und durch das ausgestoßene Gas ein Rückstoß erzielt, wobei keine Einzelheiten eines für einen wiederholten Einsatz dienenden FEEP-Antriebs beschrieben sind.

In der DE 10 2010 045 232 A1 ist eine Formation aus mehreren Kleinstsatelliten gezeigt, wobei die Relativposition und Flugtrajektorie jedes Kleinstsatelliten durch ein selbstständig und autark arbeitendes Positionsregelsystem veränderbar ist. Vorzugsweise sind alle einzelnen Satelliten mit einem Positionsregelsystem ausgestattet. Durch Lageregelungssysteme können die einzelnen Satelliten gezielt auf einen Bereich der Erde ausgerichtet werden und durch das Positionsregelsystem die Abstände der Satelliten erfasst und beeinflusst werden. Des Weiteren sind durch die Positionsregelsysteme beliebig änderbare Formationen möglich. Allerdings wird hierbei keine Kollisionsvermeidung mit adaptivem Kollisionsschlauch beschrieben, auch ist das System nur in der Lage, relativ zu gleichartigen Flugkörpern zu navigieren, aber nicht für eine Kollision gegenüber Fremdkörpern geschützt. Diese Druckschrift gibt keinerlei Hinweise, wie eine Positions- oder Lageänderung erfolgen könnte, auch ist der Aspekt einer Kollisionsvermeidung nicht adressiert.

Die US 2013/292517 A1 offenbart ein Satellitensystem, mit welchem eine Kollision von Großsatelliten mit Weltraumschrott berechnet und anschließend vermieden werden kann. Mithilfe einer Vorrichtung zur Verfolgung der Flugstrecke (orbital debris tracking device) von Weltraumschrott können Daten dieser Flugstrecke an einen Prozessor (orbit determination processor) geleitet werden. Mithilfe eines weiteren Prozessors (ephemeris processor) können Epheremiden-Daten des Weltraumschritts erzeugt werden. Anschließend wird die zukünftige Flugbahn sowie Position über die Epheremiden-Daten über einen Kollisions-Kalkulator (collision calculator) für jedes Element des Weltraumschrotts berechnet. Über einen weiteren Prozessor (avoidance orbit processor) wird die Wahrscheinlichkeit berechnet, mit welcher der Weltraumschrott mit einem Satelliten zusammenstößt. Davon abhängig werden Befehle an eine Antriebsvorrichtung der Satelliten abgegeben, um die bevorstehende Kollision zu vermeiden und den Satelliten umzulenken. Dafür besitzen die Satelliten on Board-Sensoren sowie ein Antriebssystem.

Weiterhin beschreibt die US 2010/032528 A1 ein System zur Steuerung von zumindest zwei Satelliten. Dafür ist eine Steuervorrichtung vorgesehen, welche mit ersten Messmittel die Position eines Satelliten im Weltraum bestimmen, und mit einer ersten Auswärtseinrichtung über die Position die Flugbahn im Verhältnis zu einer Referenzflugbahn bestimmen kann. Da die Satelliten in einer bestimmten Formation fliegen sollen, kann die Referenzflugbahn eine Dummy-Flugbahn sein, welche die Formation als Ganzes beschreibt.

Der Zeitschriftenartikel "Fuel consumption and collision avoidance strategy in multi-static orbit formations", E.F. Jochim et. al., ACTA ASTRONAUTICA, Bd. 68, Nr. 7-8, 1. April 2011, Seiten 1002-1014, ISSN: 0094-5765, DOI: 10.1016/.j.actaastro.2010.09.011 beschreibt eine Orbitmechanikanalyse zur Kollisionsvermeidung für eine Satellitenkonstellation mit einem Mastersatellit mit einem Gewicht zwischen 1000 kg bis 4000 kg und mehreren Mikrosatelliten mit einem Gewicht von 130kg und Durchmessern von ca. 2m². Dabei soll die relative Position der Formation aus Mikrosatelliten bezüglich des Mastersatelliten in einem Umkreis von 50km in einer Flughöhe von 500 bis 800 km geregelt und der Treibstoffverbrauch optimiert werden. Zur Kollisionsvermeidung wird ein autonomes System auf Basis von GPS-Daten angedeutet.

Die vorliegende Erfindung betrifft das Design eines formationsfähigen Kleinstsatelliten, mit einem Massengewicht unter 10 kg, insbesondere unter 2 kg bis zu unter 1 kg, für LEO-Anwendungen, das die vorgenannten Anforderungsprofile in weiten Maßen erfüllt. Insbesondere werden ein formationsfähiger Kleinstsatellit und eine Formation derartiger Kleinstsatelliten vorgeschlagen, die über eine autonome Manövrierfähigkeit zur Kollisionsvermeidung durch Relativnavigation ermöglicht.

Ein derartiger formationsfähiger Kleinstsatellit und eine Formation derartiger Kleinstsatelliten sind Gegenstand der unabhängigen Ansprüche. Vorteilhafte Weiterentwicklungen der Erfindung sind Gegenstand der Unteransprüche.

### OFFENBARUNG DER ERFINDUNG

Erfindungsgemäß wird ein formationsfähiger Kleinstsatellit, nämlich ein Nano- oder Picosatellit mit einem Massengewicht von 10 kg oder weniger für LEO-Anwendungen vorgeschlagen, der ein Gehäuse und zumindest eine im Gehäuse angeordnete, und vorzugsweise in einer Grundplatine einschiebbare Einschubplatine mit einer vorbestimmbaren Funktionalität und einem Antriebssystem zur Erzeugung eines gerichteten Impulses im Orbit in Richtung einer

Flugtrajektorie T*ₖ*, umfasst. Es wird vorgeschlagen, dass der Kleinstsatellit eine autark arbeitende Kollisionsvermeidungsvorrichtung umfasst, die eingerichtet ist, eine Trajektorienkorrektur T*ₖₖ* der Flugtrajektorie T*ₖ* mittels des Antriebssystems vorzunehmen, sofern eine Kollision mit einem Flugkörper erwartbar ist. Der Flugkörper kann jede Art vom Fremdkörper sein, insbesondere ein passiver Flugkörper, insbesondere Weltraumschrott, Kleinstmeteore, Asteroiden oder sonstige passive Gegenstände, sein. Der Flugkörper kann auch ein weiterer formationsfähiger Kleinstsatellit derselben oder einer anderen Formation oder ein Einzelsatellit oder Raketenteil mit einer autonomen Steuerung sein. In diesem Fall kann es vorteilhaft sein, wenn nicht nur der formationsfähige Kleinstsatellit eine Kollisionsvermeidungsvorrichtung umfasst, sondern auch der weitere aktive Flugkörper eine gleichartige Kollisionsvermeidungsvorrichtung umfasst, und ein günstigenfalls bidirektionaler Datenaustausch zwischen dem Kleinstsatelliten und dem Flugkörper hergestellt werden kann, um eine Kollisionsvermeidung durch eine Trajektorienkorrektur derart zu gestalten, dass ein größtmöglicher Abstand und eine kleinstmögliche Kollisionswahrscheinlichkeit bereitstellbar sind.

Im Gegensatz zum Stand der Technik, die eine Konstellation von Satelliten kennt, die ferngesteuert von einer Bodenstation eine Kollisionsvermeidung vornehmen können, wird ein autark arbeitendes System innerhalb des Kleinstsatelliten vorgeschlagen, das ohne Verbindung mit einer Bodenstation ein Ausweichmanöver zur Vermeidung einer Kollision einleiten kann. Da im Bereich von LEO-Anwendungen Kleinstsatelliten nur für eine kurze Zeit ihrer Umlaufbahn mit einer Bodenstation Sichtkontakt besteht, kann keine hundertprozentige Kollisionsvermeidung durch ein konstellationsbasiertes Antikollisionssystem erreicht werden. Eine autark arbeitende Kollisionsvermeidungsvorrichtung innerhalb des Kleinstsatelliten ist in der Lage, in jeglicher Position der Orbitalbahn autonom gegenüber passiven und aktiven Flugkörpern eine Korrektur T*ₖₖ* der Flugtrajektorie T*ₖ*, vorzunehmen, um eine Kollisionswahrscheinlichkeit zu senken und die Lebensdauer und die Funktionsfähigkeit der Satellitenformation aufrechtzuerhalten. Insbesondere bei polaren Satellitenorbitalen kommt es in der Nähe der Pole zu einer relativ hohen Wahrscheinlichkeit einer Kollision von formationsfähigen Satelliten, diese sich in der Umgebung der Polkappen besonders nahe kommen. Gerade in diesem Bereich, in dem die Dichte möglicher Bodenstationen sehr gering ist, gilt es, eine Kollision zu vermeiden, die mit einem autark arbeitenden System vermieden werden kann.

Es bestehen Ähnlichkeiten zu der Kollisionsvermeidungssituation im Straßen- oder Luftverkehr, allerdings sind im Weltraum andere einsetzbare mögliche Sensoren und Umgebungsverhältnisse (Vakuum, niedrige Temperaturen,...) zu beachten. Die Umsetzung einer Ausweichstrategie basiert auf völlig anderen Dynamikverhältnissen im Vergleich zu Straßen- und Luftverkehr. Während der Straßenverkehr durch die 2-dimensionale Erdoberfläche und die Reibung der Räder bei der Fortbewegung und der Luftverkehr im Wesentlichen durch die Aerodynamik bestimmt werden, ist im Weltraum die Gravitation die dominierende Kraft, welche die resultierende Reaktion im 3-Dimensionalen hinsichtlich der Positionsänderung auf Aktivitäten der Triebwerke bestimmt.

Aus gemessenen Relativ-Abstandsdaten zwischen Weltraumobjekten wird an Hand von geeigneten Umlaufbahnmodellen der Satelliten eine Vorhersage der künftigen Bahn und möglicher Kollisionswahrscheinlichkeiten mit anderen bekannten Objekten durchgeführt. Zur Relativabstandsmessung können optische und Funk-Messungsverfahren eingesetzt werden. Auch neu gemessene Objekte und ihre Bahnvorhersagen werden mit einbezogen. Anschließend ist gemäß der aktuellen Bahndynamik eine Bahn zu bestimmen die ohne Kollision mit anderen Objekten realisiert werden kann. Die entsprechenden Lage- und Positions-Kontroll-Aktivitäten sind zu bestimmen und umzusetzen. Hinsichtlich der per Kommunikationsverbindungen erreichbaren Objekte sind durch geschlossene Regelkreise von der Sensorik über die Kommunikationsverbindungen zur Aktuatorik selbstorganisierende Verfahren einzusetzen, welche eine sichere Abstimmung der Bahnen relativ zueinander durchzuführen haben.

Vorteilhaft ist die Funktionalität des klassischen Kabelbaums durch eine Grundplatine ersetzt, in der eine oder mehrere Einsteckplatine, die jede für sich einen spezifischen Zweck erfüllen, so dass alle Energieversorgungs- und Datenübertragungsleitungen des Satelliten in einer Platine realisiert sind und Subsystemplatinen durch entsprechendes Einstecken in diese Grundplatine effizient angeschlossen werden. Dies ist weder bei Groß- noch bei Kleinsatelliten so realisiert.

Erfindungsgemäß umfasst die die Kollisionsvermeidungsvorrichtung eine Körperortungseinrichtung mit zumindest einem oder mehreren optischen oder funkbasierten, insbesondere mikrowellenbasierten Körpererkennungssensoren zur Erfassung einer Relativlage und Relativgeschwindigkeit eines Flugkörpers in Richtung eines kegelförmigen, die Flugtrajektorie T*ₖ* umfassenden Kollisionsschlauchs. Ferner umfasst die Kollisionsvermeidungsvorrichtung erfindungsgemäß eine Kollisionsprädiktionseinrichtung zur Bestimmung eines möglichen Kollisionsrisikos im Kollisionsschlauch und eine Ausweicheinrichtung zur Steuerung des Antriebssystems hinsichtlich einer Trajektorienkorrektur T*ₖₖ*. Hierbei wird vorgeschlagen, dass die Kollisionsvermeidungsvorrichtung sowohl eine Körperortungseinrichtung umfasst, die mit optischen, funkbasierten, insbesondere mikrowellen- oder radarbasierten Körpererkennungssensoren ausgestattet ist, und die sowohl aktive als auch passive Flugkörper erkennen kann. Dabei erfassen die Körpererkennungssensoren Flugkörper in Richtung eines Kollisionsschlauchs, der eine vordefinierbare Größe und eventuell vordefinierbare Spreizung im Sinne eines auffächernden Winkels aufweist, und in dem Fremdkörper erfasst werden. Mittels einer Kollisionsprädiktionseinrichtung, die eine Flugtrajektorie der Flugkörper bestimmen kann und ein Durchsetzen des Kollisionsschlauchs ermitteln kann, kann ein Kollisionsrisiko bestimmt werden, und mittels einer Ausweicheinrichtung können Steuerbefehle an das Antriebssystem abgeleitet werden, um eine Trajektorienkorrektur T*ₖₖ* bereitzustellen, die ein kleinstmögliches Kollisionsrisiko bei einem minimalen Energieverbrauch ermöglicht. Somit basiert die Kollisionsvermeidungsvorrichtung in der Erkennung von Flugkörpern sowohl mit aktiven Körpererkennungssensoren, zum Beispiel einen optischen Sensor, wie einer Videokamera oder elektromagnetisch arbeitenden Sensoren, wie Mikrowelle, IR-Sensor oder Radarerfassung, um insbesondere passive Flugkörper zu erkennen. Erfindungsgemäß ist die Körperortungseinrichtung darüber hinaus mit Sende- und Empfangssensoren gekoppelt sein, die in Kommunikation mit anderen formationsfähigen Kleinstsatelliten steht, um deren aktuelle Position und deren aktuelle Trajektorie abfragen zu können. Insbesondere kann eine derartige Kommunikationsverbindung einen beschränkten, gerichteten Sende- und Empfangsbereich um den Kleinstsatelliten aufweisen, um lediglich mit in der Nähe befindlichen bzw. kreuzenden aktiven Fremdkörper in Kommunikation treten zu können. Wird ein Flugkörper erkannt, dessen Trajektorie in Richtung des Kollisionsschlauchs gerichtet ist, kann eine Kollisionsprädiktionseinrichtung ein Kollisionsrisiko im Kollisionsschlauch bestimmen. Dies hängt davon ab, wie die Flugtrajektorie des Flugkörpers in Richtung des Kollisionsschlauchs ausgerichtet ist. Im Falle eines Durchsetzens der Flugtrajektorie des Flugkörpers durch den Kollisionsschlauch kann ein Kollisionsrisiko abgeleitet werden. In diesem Fall kann eine Ausweicheinrichtung eine Trajektorienkorrektur T*ₖₖ* bestimmen, die mit einem geringstmöglichen Aufwand an Lage- und Antriebsenergie eine Korrektur der Flugtrajektorie T*ₖ* definieren kann, um einer Kollision entgegenzuwirken.

In einer weiteren vorteilhaften Ausführungsform der vorgenannten Ausführungsform kann die Körperortungseinrichtung einen minimalen Durchmesser d*ₖ* des Kollisionsschlauchs autonom so wählen, dass darin mindestens der Kleinstsatellit umfasst ist, insbesondere so wählen, dass zumindest ein Mehrfaches des Durchmessers des Kleinstsatelliten umfasst ist. Dadurch wird erreicht, dass der Kollisionsschlauch eine Umgebung des Kleinstsatelliten mit umfasst, um somit einen gewissen Sicherheitsabstand beim Begegnen von Fremdkörpern und Kleinstsatelliten gewährleisten zu können. Des Weiteren kann die Kollisionsprädiktionseinrichtung dem Flugkörper einen Fremdkörperschlauch zuordnen, und einen minimalen Durchmesser df des Fremdkörperschlauchs zu wählen, dass darin mindestens der Flugkörper umfasst ist, insbesondere so wählen, dass zumindest ein Mehrfaches des Durchmessers des Flugkörpers umfasst ist. Somit wird vorgeschlagen, dass sowohl ein Kollisionsschlauch, der den Kleinstsatelliten umfasst und der entlang einer Flugtrajektorie des Kleinstsatelliten ausgerichtet ist, und ein Fremdkörperschlauch bestimmt wird, der den Fremdkörper, insbesondere ein Mehrfaches des Durchmessers des Fremdkörpers umfasst, der in Richtung der Trajektorie des Fremdkörpers gerichtet ist, bestimmt wird. Dabei kann die Ausweicheinrichtung bei Überlappung des Kollisionsschlauchs mit dem Fremdkörperschlauch in einem Überlappungsbereich A*_{kf}* eine Trajektorienkorrektur T*ₖₖ* derart bestimmen, insbesondere mehrere Trajektorienkorrekturen mit einer Kostenfunktion simulieren, und hieraus eine kostenminimale Trajektorienkorrektur T*ₖₖ* bestimmen, und das Antriebssystem zur Erreichung der Trajektorienkorrektur T*ₖₖ* steuern. Eine kostenminimale Trajektorienkorrektur bedeutet im Sinne der Erfindung, dass mit geringstmöglichem Aufwand versucht wird, eine Trajektorienkorrektur vorzunehmen, die zuverlässig eine Kollisionsvermeidung mit dem erkannten Fremdkörper bereitstellt. Dies bedeutet einen möglichst geringen Energieaufwand zur Korrektur der Trajektorie hinsichtlich einer Lage und eines Beschleunigungsimpulses, der einen möglichst großen Abstand zwischen Kollisionsschlauch und Fremdkörperschlauch ermöglicht. Dabei können beispielsweise heuristische Verfahren wie mengenwertige Funktionen, regelungstechnische Ansätze, Fuzzy-Logic oder ähnliche Simulations- und Determinierungsverfahren eingesetzt werden, um eine kostenminimale Trajektorienkorrektur erreichen zu können.

Die Weltraumarbeitsumgebung ist geprägt durch intensiven Strahlungseinfall, da die abschirmende Wirkung der Erdmagnetosphäre fehlt, die an der Erdoberfläche Strahlung schirmt. Typisch sind Single Event Upsets (SEU) und Latchups die insbesondere Elektronikelemente beeinträchtigen. Je kompakter Elektronikkomponenten realisiert werden, desto empfindlicher sind diese für Strahlungseffekte. Gerade für Kleinst-Satelliten, wo besonders extreme Miniaturisierung erforderlich ist, stellt eine zuverlässige Bordelektronik eine besondere Herausforderung dar, da sich klassische Ansätze durch strahlungsharte Bauteile (die auf Elektronikbauteile mit besonders dicker Siliziumschichten, also sehr "alter" Technologie, basieren) oder durch Abschirmung durch Bleiplattenüber den Elektronikbauteilen, dort verbieten. Insofern sind hier andere Ansätze gefordert, um den zuverlässigen Betrieb von Kleinstsatelliten durch integrierte Software-/Hardware-Lösungen zu garantieren.

Aus diesem Grund kann in einer weiteren Ausführungsform die Einschubplatine eine Mehrzahl von Funktionskernen zur Bereitstellung einer vorbestimmbaren Funktionalität umfassen, insbesondere eine gerade Anzahl von zumindest zwei oder mehreren vergleichbaren Funktionskernen zur redundanten Bereitstellung der Funktionalität umfassen, wobei eine Watchdogeinrichtung eine korrekte Arbeitsweise der Funktionskerne überwacht, und wobei bevorzugt die Watchdogeinrichtung die Funktionalität eines Funktionskerns durch einen Testfunktionslauf überwacht und die Watchdogeinrichtung bei Detektion eines Fehlers eine Fehlerbehebungsmaßnahme des einen oder eine Gruppe von Funktionskernen zur kontinuierlichen, unterbrechungsfreien Bereitstellung der Funktionalität auswählt.

Somit wird vorgeschlagen, dass die Einschubplatine bzw. zumindest eine Einschubplatine des Kleinstsatelliten eine gerade Anzahl von Funktionskernen, insbesondere zwei, vier oder sechs Funktionskerne umfasst, wobei jeder Funktionskern eingerichtet ist, die grundsätzliche Funktion der Einschubplatine ausführen zu können. In der Regel arbeiten die Funktionskerne autark und parallel nebeneinander. Eine Watchdogeinrichtung überwacht kontinuierlich und/oder periodisch die Funktionsweise jedes Funktionskerns und vergleicht Ein- und Ausgaben sowie eine korrekte Arbeitsweise jeder Funktionskerne. Dabei kann die Watchdogeinrichtung einen Testfunktionsablauf simulieren, in dem mittels vorgegebener Eingabeparameter und vorbekannte Ausgabeparameter die Funktion jedes Funktionskerns getestet werden kann. Ergibt sich aufgrund der Überwachung bzw. eines Testfunktionsablaufs, dass einer der Funktionskerne nicht korrekt arbeitet, so wird deren Funktion abgeschaltet bzw. Fehlerbehebungsmaßnahmen eingeleitet. Diese können in einem Reset oder in einer Deaktivierung des Funktionskerns liegen. Auch kann eine Neuprogrammierung oder eine Übertragung eines Speicherinhalts eines funktionierenden Funktionskerns in einen Speicherinhalt eines offensichtlich fehlerhaften Funktionskerns vorgenommen werden. So kann ein laufendes Programm während der Fehlerbehebungsmaßnahme überschrieben werden. Auch kann die Einschubplatine oder ein Funktionskern neu gestartet werden, wobei Fehler, die sowohl im Speicherinhalt, als auch in der Verarbeitung auftreten, bereinigt werden können. Die Watchdogeinrichtung kann beispielsweise ein periodisches Signal des Funktionskerns überwachen, oder konkrete Ergebnisse eines Testfunktionsablaufs überprüfen. Auch ist eine Kombination verschiedener Überwachungsmaßnahmen denkbar. Es kann sowohl die CPU als auch das RAM jedes Funktionskerns überwacht werden, beispielsweise durch Prüfsummenbildung oder Ein- und Auslesen vorbestimmter Bitmuster und Bereiche des Speichers mittels eines Software-Implemented-Fault-Injection-Algorithmus (SWIFI). Dabei können insbesondere Bitfehlerraten reduziert werden.

Die Watchdogeinrichtung kann sowohl hard- als auch softwareimplementiert sein und kaskadierte Überwachungsfunktionen vornehmen. Dabei kann in heißer Redundanz, d. h. im laufenden Betrieb, eine kontinuierliche Überwachung der korrekten Funktionsweise der Funktionskerne vorgenommen werden. Die Funktionskerne können in einem Master-Slave-Betrieb arbeiten, wobei die Reihenfolge von Master und Slave im Fehlerfall vertauscht werden kann. So kann ein Master-Local Programme mit einem Second Region Local Replication im Slave parallel arbeiten und eine Checksumme kann aus einer Kohärenzanalyse überwacht werden. Treten hierbei Unterschiede auf bzw. werden Fehler entdeckt, so kann eine Fehlerbehebungsmaßnahme, insbesondere des Masterfunktionskerns ausgelöst werden.

In einer Fortbildung der vorherigen Ausführungsform kann die Watchdogeinrichtung einen FDIR-Algorithmus (Fault-Detection, Fault-Isolation and Recovery Techniques) implementieren, und insbesondere ein Powerreset, eine Umschaltung zwischen Funktionskernen und/oder ein Softwarereset durchführen, wobei dies insbesondere energie-effizient für zwei Funktionskerne in heißer Redundanz implementiert ist und wobei zumindest ein Funktionskern soft- oder hardwaremäßig resettet werden kann. Ein FDIR-Algorithmus entspricht einem Selbstheilungsalgorithmus, wobei eine Software selbstständig in der Lage ist, Ausfälle zu erkennen (Fault-Detection, Watchdog), den Fehler zu bestimmen (Fault-Isolation, beispielsweise Ausschalten oder Reset defekter Komponenten) und geeignete Korrekturen durchzuführen (Recovery, zum Beispiel Umschalten auf einen den zweiten Funktionskern- oder System-Reboot). Beispielsweise kann durch eine Prüfsummenbildung fehlerhafte Bits erkannt werden und eventuell korrigiert werden. Bei steigender Fehlerdichte können fehlerhafte Speicherstellen erkannt und korrigiert oder gesperrt werden, oder auf einen anderen Funktionskern umgeschaltet oder resettet werden. Dabei ist es möglich, nicht im Sinne eines Majority Votings, sondern im Sinne einer minimalen Anzahl von redundanten Funktionskernen, nämlich zwei eine erhöhte Fehlerrobustheit zu erreichen, um eine Strahlungshärte auch ohne konventionell eingesetzte Abschirmungen und Bleiplatten zu ermöglichen. Hierdurch wird eine Langlebigkeit der technischen Funktion des Kleinstsatelliten erreicht, wobei auf eine strahlungsharte Ausführung des Kleinstsatelliten weitgehend verzichtet werden kann, und lediglich mit Softwaretechnologie die Funktion und Ausfallsicherheit des Kleinstsatelliten gewährleistet werden kann.

Somit wird eine Verwendung energieeffizienter stark miniaturisierter Bauteile in heißer Redundanz vorgeschlagen, die durch Software auf einem "intelligenten" Watchdog überwacht werden. Fortgeschrittene FDIR-Software (Fault Detection, Identifikation and Recovery) ermöglicht nach Auftreten von Strahlungseffekten durch schnelle Detektion von Fehlern, gefolgt von der Initiierung rascher Umschaltvorgänge auf die noch fehlerfrei funktionierenden Komponenten und anschließend sofort eingeleiteten Re-Boot-Vorgängen der fehlerhaften Komponenten eine so schnelle interne Reaktion, so dass ein Beobachter von außen gar keine Änderung der Funktionsfähigkeit dieser Elektronik-Komponente wahrnimmt. Diese Ausführungsform ist insbesondere für die sehr stark von zuverlässiger Funktionsfähigkeit abhängigen Elektronik-Komponenten im Bereich der Borddatenverarbeitung und der Lage-/Orbit-Kontrolle von besonderer Wichtigkeit und stellt damit eine Kerngrundlage für kooperierende, verteilte, autonom reagierende Satelliten dar, beispielsweise beim Formationsflug.

In einer vorteilhaften Weiterbildung des Kleinstsatelliten kann das Antriebssystem zumindest ein Reaktionsrad und zumindest zwei Magnetfeldspulen, bevorzugt ein Reaktionsrad und zumindest drei, insbesondere sechs Magnetfeldspulen einer Magnettorquer-Einrichtung zur kombinierten Lageregelung in eine beliebige Richtung umfassen. Das Reaktionsrad kann miniaturisiert und beispielsweise auf einer Einschubplatine angeordnet sein. Die zumindest zwei, insbesondere zumindest vier und bevorzugt sechs Magnetfeldspulen können auf Rückwänden von Gehäuseoberflächen des Kleinstsatelliten angeordnet sein. Mithilfe des Reaktionsrades kann im Sinne eines mechanischen Impulses zumindest entlang einer Achse ein Impuls zur Lageausrichtung in einer Achsenrichtung bereitgestellt werden. Durch Magnetfeldspulen einer Magnettorquer-Einrichtung kann eine Ausrichtung des Kleinstsatelliten entlang dem Erdmagnetfeld erreicht werden, wobei diejenige Magnetfeldspulen, die bestromt sind, sich in Richtung des Erdmagnetfeldes ausrichten und so eine Lagedrehung ermöglichen. Mit mindestens einem Reaktionsrad und zwei jeweils um 90° versetzten Magnetfeldspulen kann grundsätzlich eine Lageregelung mit einer minimalen Anzahl von Bauteilen und einer sehr geringen Energieaufnahme für die Lageregelung erreicht werden. Da sechs Gehäusewände den in der Regel kubischen Kleinstsatelliten begrenzen, ist es vorteilhaft möglich, im Sinne einer Gleichausbildung der Gehäusewände, auf jeder Gehäuserückwand eine Magnetfeldspule anzuordnen, so dass sechs Magnetfeldspulen, jeweils zwei paarweise in einer Achsrichtung angeordnete Magnetfeldspulen, und zumindest ein Reaktionsrad vorgesehen sind, um eine reaktionsschnelle und energieminimale Lageregelung des Kleinstsatelliten erreichen zu können.

In einer Fortbildung der vorgenannten Ausführungsform des Antriebssystems können zumindest zwei aus einer Gruppe von zumindest einem Sternsensor, zumindest einem Sonnensensor, zumindest einem Gyroskop, bevorzugt ein MEMS-Gyroskop und/oder zumindest ein Magnetometer, insbesondere zumindest ein 3D-Magnetometer, ein 3D-Gyroskop, sechs zweiachsige Sonnensensoren und sechs zweiachsige Sternensensoren auf einer Einschubplatine und/oder auf einer oder mehreren Gehäusewänden, insbesondere auf jeder Gehäusewand angeordnet sein, wobei weiterhin bevorzugt das Reaktionsrad als miniaturisiertes Reaktionsrad zur Korrekturlageregelung auf einer Einsteckplatine oder auf der Grundplatine angeordnet ist. Der generelle Aufbau eines Reaktionsrades ist grundsätzlich bekannt wobei speziell für den Einsatz in Miniatursatelliten vorgeschlagen wird, eine besonders energie-effiziente Realisierung mit einem Energiebedarf von 150 mW oder weniger bei besonders hohe Drehgeschwindigkeiten von 19.000 U/min oder mehr einzusetzen. Für eine Lageregelung im Antriebssystem ist es erforderlich, die relative Lage, d. h. Ausrichtung des Kleinstsatelliten gegenüber den anderen Satelliten der Formation und bezüglich der Erdoberfläche bestimmen zu können.. Hierzu kann eine Gruppe von zumindest zwei Sensoren, die aus einem Sternensensor, einem Sonnensensor, einem Gyroskop oder einem Magnetometer ausgewählt sind, eingesetzt werden. Ein Sternensensor ist in der Lage, die Lage der Sonne bezüglich einer Oberfläche des Kleinstsatelliten bestimmen zu können. Da die Sonne nur abschnittsweise entlang der Orbitalbahn für den Kleinstsatellit sichtbar ist, kann des Weiteren ein Sternensensor, der die Lage bezüglich eines Sternbildes oder eines Fixsternes bestimmen kann, umfasst sein. Ein Gyroskop ermöglicht im Raum die Bestimmung der Lage mittels eines Kreiselprinzips und ein Magnetometer kann die Lage in Bezug auf das Erdmagnetfeld bestimmen. Durch Kombination der einzelnen Sensoren, insbesondere bei Anordnung an einer Gehäusewand kann bei Gleichausführung aller sechs Gehäusewände eines kubischen Satelliten auf jeder Gehäusewand zumindest ein Sonnensensor, zumindest ein Gyroskop und ein 3D-Magnetometer sowie ein 3D-Gyroskop beispielsweise als MEMS-Gyroskop (Micro-Electro-Mechanical System) ausgeführt sein. Derartige MEMS-Gyroskope können als integrierte Schaltkreise, beispielsweise dreidimensional arbeiten, und umfassen oszillierende Komponenten, deren Beschleunigung und Richtungsänderungen erkannt werden können. Der Magnetometer kann als magnetoresistives Halbleiterbauteil, insbesondere als 3D-Magnetfeldkompass ausgeführt sein. Bevorzugt sind zumindest einzelne Sensoren auf Gehäuserückwänden oder Gehäusevorderseiten des Kleinstsatelliten angeordnet und ermöglichen eine energieeffiziente und einfache Lageregelung des Antriebssystems.

In einer bevorzugten Weiterbildung des Kleinstsatelliten umfasst das Antriebssystem zumindest einen elektrischen Antrieb, insbesondere zumindest einen FEEP-Antrieb (Feldeffekt-Emissionstriebwerk) oder einen Lichtbogenantrieb (micro arc thruster), insbesondere vier elektrische Antriebe, die bevorzugt als FEEP-Antriebe ausgebildet sind, die weiterhin bevorzugt im Kantenbereich oder Eckbereich des bevorzugt kubischen Gehäuses bevorzugt in oder an einem Gehäuserahmen angeordnet sein können. Der Gehäuserahmen umfasst als Strukturelemente vier einzelnen Kanten, die aus einem Leichtmetall wie Aluminium bestehen und die Trägerstruktur für die Gehäuseoberflächen des Kleinstsatelliten definieren. In diesem Kantenelement kann ein FEEP-Antrieb eingebaut sein, der in eine Richtung eine Antriebsleistung erzeugen kann. Ein FEEP-Antrieb ist eine Sonderform eines elektrothermischen Antriebs, wobei elektrische Leistung genutzt wird, um ein Arbeitsgas auf hohe Temperaturen aufzuheizen und in geladene Teilchen (Ionen und Elektronen) aufzuspalten. Dabei wird zwischen einer Kathode und einer Anode ein Magnetfeld aufgespannt der die geladenen Treibstoffteilchen mit hoher Geschwindigkeit ausstößt. Durch die Impulserhaltung bewegt sich der Satellit in die entgegengesetzte Richtung zum ausgestoßenen Treibstoff. Der erforderliche Strom zum Aufbau des Magnetfeldes kann beispielsweise von Solarzellen, die auf der Oberfläche von Gehäusewänden des Kleinstsatelliten angeordnet sind, geliefert werden. Der zu erzeugende Schub ist relativ gering und liegt im Bereich von Millinewton, aber durch das geringe Gewicht eines Kleinstsatelliten unterhalb von 2 kg, bevorzugt unterhalb 1 kg, genügen eine geringe Antriebsleistung zur Erzeugung einer Lagekorrektur oder einer Trajektionskorrektur, insbesondere zur Vermeidung einer Relativkollision und zum Erhalt einer Flugbahn. Dabei wird nur sehr wenig Treibstoff benötigt und die Einsatzdauer des FEEP-Antriebs ist sehr hoch. Somit ergibt sich bei dem zwar leistungsschwachen Antrieb bedingt durch das im Verhältnis noch stärker reduzierte Gesamtgewicht ein superlinearer Antriebseffekt gegenüber herkömmlichen Antriebskonzeption bestehender Kleinstsatellitendesigns, da zwar ein Antrieb mit relativ geringer Schubkraft eingesetzt wird, aber durch die sehr geringe Eigenmasse des Kleinstsatelliten ein überraschend hohes Schub/Gewichtsverhältnis erreicht werden kann. Im Gegensatz zum Stand der Technik, bei dem - zumeist für einen einmaligen Gebrauch durch Erhitzung der Druck erhöht und durch das ausgestoßene Gas ein Rückstoß erzielt wird, ist der neuartige Ansatz der, dass zur Beschleunigung elektrisch geladene Teilchen in einem angelegten Magnetfeld eingesetzt wird, wobei dies exakt steuerbar, mehrfach wiederholbar und in geringen Impulsleistungen einsetzbar ist. Bevorzugt kann als Weiterbildung der vorgenannten Ausführungsform der Kantenbereich des Gehäuserahmens ein Hohlprofil oder ein Profil mit einer porösen Innenstruktur umfassen, in dem der Treibstoff, insbesondere Gallium. Ammoniak oder Hydrazin, für den elektrischen Lichtbogenantrieb gelagert ist. Bevorzugt ist der Treibstoff beim Startvorgang tiefgefroren gelagert und kann beim Erreichen eines Zielorbits verflüssigt werden. Somit wird vorgeschlagen, dass vier Eckprofile des Gehäuserahmens jeweils einen FEEP-Antrieb an ihren Endbereichen aufweisen, wobei der Kantenbereich des Gehäuserahmens als Hohlprofil ausgeführt ist, in dem in einer Start- oder Initialisierungsphase Treibstoff, insbesondere bei Raumtemperatur festes Gallium, Ammoniak oder Hydrazin für den elektrischen Antrieb gelagert ist. Somit wird vorgeschlagen, dass vier Eckprofile des Gehäuserahmens jeweils einen elektrischen Antrieb an ihren Endbereichen aufweisen, wobei der Kantenbereich des Gehäuserahmens als Hohlprofil ausgeführt ist, in dem in der Start- oder Initialisierungsphase Treibstoff gelagert wird. Anstelle des Hohlprofils kann auch eine poröse Innenstruktur des Strukturelements, z.B. als metallischer Schwammstruktur vorgesehen sein, wobei eine hohe Steifigkeit bei hoher Hohlraumdichte zur Treibstofflagerung erreicht werden kann. Dadurch, dass tiefgefrorener Treibstoff das Hohlprofil bzw. die Schwammstruktur ausfüllt, wird eine hohe mechanische Stabilität, insbesondere bei einer Startphase des Kleinstsatelliten erreichen. Befindet sich der Satellit in seiner Orbitalposition, so kann der Treibstoff verflüssigt werden und dient zur Erzeugung der Antriebsleistung. Durch diese Ausführungsform wird kein separater Treibstofftank benötigt, sonder der Treibstoff konstruktiv in die mechanischen stabilen Teile des Gehäuserahmens integriert und dient selber als mechanischer Stabilitätsträger in der Startphase.

In einer vorteilhaften Weiterbildung kann im Gehäuse ein Gehäuserahmen, mehrere Gehäusewände, insbesondere sechs Gehäusewände und eine Grundplatine mit zumindest zwei Stecksockel umfasst sein, wobei in der Grundplatine die Einschubplatine eingesteckt ist und die Einschubplatine in Kommunikation über einen Daten- und Energiebus, der zumindest einen, insbesondere mehrere der Kommunikationsprotokollstandards UART (Universal Asynchronous Receiver Transmitter), SPI (Serial Peripheral Interface), CAN (Controller Area Network), SpaceWire und/oder I²C (Inter-Integrated Circuit) , insbesondere ein serieller Informationsbus, unterstützt, um mit weiteren Einschubplatinen und/oder dem Antriebssystem und/oder zumindest einer Sensor- und/oder einer Aktuatoreinrichtung und einer Stromversorgungseinrichtung in Verbindung zu stehen. Hierdurch ist keinerlei zusätzliche Verkabelung notwendig, wie diese im Stand der Technik noch vorhanden ist und es sind alle Energieversorgungs- und Datenübertragungsleitungen des Satelliten in der Grundplatine realisiert. Dieser Ansatz einer Grundplatine wesentlich im Hinblick auf den Einsatz bei Kleinst-Satelliten mit einer Masse < 10 kg.

In dieser Ausführungsform wird ein modularer Aufbau des elektrischen Systems des Kleinstsatelliten vorgeschlagen. Zentraler Bestandteil ist eine Grundplatine, die zumindest zwei, insbesondere mehrere Stecksockel umfasst, in der einzelne Einsteckplatinen eingesteckt werden können. Die Einsteckplatinen kommunizieren miteinander über einen Daten- und Energiebus, der zumindest ein oder mehrere Kommunikationsstandardprotokolle berücksichtigt. Des Weiteren kann auch ein SpaceWire-Kommunikationsprotokollstandard unterstützt sein. Ein SpaceWire-Bus ist ein Feldbus, den die ESA spezifiziert hat und der Seriell- und Vollduplexdaten mit hoher Geschwindigkeit transportieren kann. Er weist eine hohe Robustheit und einen geringen Stromverbrauch auf und insbesondere eine hohe EMV-Festigkeit und ist an Weltraumerfordernisse angepasst. Hierdurch ist es möglich, dass mehrere Einsteckplatinen in einem genormten Stecksystem über eine Grundplatine miteinander in Verbindung treten und Daten zwischen einzelnen Grundplatinen sowie die Stromversorgung und externe Daten zum Antriebssystem und zum Sensorsystem des Kleinstsatelliten ausgetauscht werden können. Bevorzugt sind zumindest Teile des Antriebssystems und des Sensorsystem, insbesondere die essentiellen Systemkomponenten hiervon in den Gehäusewänden bzw. im Gehäuserahmen angeordnet. Jede der Einsteckplatinen kann unterschiedliche Aufgaben aufnehmen, insbesondere eine Kommunikation (COMM), ein zentrales Rechensystem (OBDH), ein Antriebssteuerungssystem (ADCS) und ein Energieversorgungssystem (EPS) umfassen. Des Weiteren können Stecksysteme mit einer oder mehreren Einsteckplatinen (SENS) für die unterschiedlichen wissenschaftlichen und technischen Aufgaben des Kleinstsatelliten, beispielsweise für eine Radarüberwachung, eine visuelle Überwachung der Erdoberfläche, eine Kommunikationsbereitstellung oder Ähnliches genutzt werden. Somit sind die Kleinstsatelliten in einer minimalen Konfiguration voll flug- und steuerungstauglich und verfügen insbesondere über ein autark arbeitendes Kollisionsvermeidungssystem. Durch Einschub weiterer Funktionsplatinen können spezielle Funktionen des Satelliten für die verschiedenen Einsatzgebiete bereitgestellt werden.

In einer Weiterbildung der vorgenannten Ausführungsform kann die Grundplatine eine mehrstufige und skalierbare Stromversorgungseinrichtung umfassen, die Energie zumindest einer Photovoltaikzelle und/oder zumindest eines Akkumulators als Stromquelle bereitstellt, wobei eine Mehrzahl von Spannungswandlern, Ladereglern und Energieüberwachungs- und Energieschalteinrichtungen umfasst sind, um sowohl eine Energieabgabe der Stromquelle als auch Energieaufnahme von Energiesenken, insbesondere von Einschubplatinen oder Antriebssysteme zu erfassen, zu verteilen und zu regeln.

In dieser Ausführungsform wird ein elektrisches Energiesystem eines Kleinstsatelliten, insbesondere eines Picosatelliten im Sinne der Erfindung vorgeschlagen, bei der eine Energieerzeugung beispielsweise auf Basis von Solarzellen, die auf den Außenseiten der Gehäusewände angeordnet sind, erfolgt, und zusätzlich im Inneren ein Energiespeicher, beispielsweise als wiederaufladbarer Akkumulator oder als Brennstoffzelle oder Ähnliches, angeordnet ist. Der Energiespeicher kann durch die Solarzellen aufgeladen werden. Sowohl die Solarzellen als auch der Energiespeicher können das elektrische System des Kleinstsatelliten mit Strom versorgen, wobei kaskadiert verschiedene Spannungsstufen bereitgestellt werden können, die im Fehlerfall einzeln abgeschaltet werden können. Hierdurch wird eine redundante redundante Energieerzeugung, Speicherung, Umwandlung und Verteilung erreicht. Dabei können sowohl mehrere DC/DC-Wandler zur Bereitstellung von Betriebsspannung aus den Fotovoltaikzellen bereitgestellt sein. Es können mehrere Laderegler zur Aufladung und zur Abgabe von Energie aus den wiederaufladbaren Energiespeichern vorgesehen sein. Die Energiespeicher können die Spannung in verschiedenen Spannungsebenen bereitstellen, wobei weitere DC/DC-Wandler verschiedene Spannungsstufen bereitstellen können. Die DC/DC-Wandler können effiziente, energiesparende Hoch- und Tiefsetzsteller umfassen. Auch können von einer Spannungsstufe durch weitere DC/DC-Wandler höhere oder niedrigere Spannungsstufen abgeleitet werden.

Ein derartiges EPS (Electric Power System) ermöglicht die Versorgung der einzelnen Subsysteme des Kleinstsatelliten auf vielfältige Art und Weise. So kann auf jeder Gehäusewandoberfläche eine Photovoltaikzelle angeordnet sein, so dass sechs individuell arbeitende Photovoltaikzellen zur Erzeugung regenerativer Energie miteinander verbunden werden können. Auf einer Einsteckplatine kann ein, zwei oder mehrere Akkumulatoren als Energiespeicher angeordnet sein, der bzw. die Energie speichern und abgeben können. Die Photovoltaikzelle auf jeder Gehäusewand kann zweigeteilt sein, und kann einen Zwischenraum definieren, in dem beispielsweise Lagesensoren angeordnet sein können. Auf der Rückseite der Gehäusewand kann eine Magnetfeldspule als Magnettorquer oder gleichwohl als Magnetometer eingesetzt sein. Der Magnetometer kann stromsparend in Art eines integrierten elektromagnetischen Halbleiterkompasses ausgeführt sein. Mithilfe von DC/DC-Wandlern kann die höhere Spannung der Photovoltaikzellen auf eine niedrige Spannung zur Aufladung einer Batterie oder eines Akkumulators herabgesetzt werden. Es können zum Beispiel Lithium-lonen-Batterien mit mehreren Amperstunden Kapazität eingesetzt sein. Dabei können Spannungen von etwa 3,4 V bis 3,9 V bereitgestellt werden und auf 5 V mit DC/DC-Wandlern erhöht werden. Dabei kann ein 3,3 V-Bus und ein 5 V-Spannungsbus zur Verfügung gestellt werden. Die Verteilung der Energie kann mithilfe von Schutzschaltern oder Stromsicherungen bereitgestellt werden. Überspannungs- und Überstromschutzmechanismen können vorgesehen sein. Hierdurch ist es möglich, redundant mit hoher Zuverlässigkeit ein Energiesystem für den Kleinstsatelliten bereitzustellen.

Nach einer weitergehenden Ausführungsform der vorgenannten Varianten des Kleinstsatelliten kann die Grundplatine planar ausgebildet sein und eine I/O-Platine mit zumindest einem analogen und/oder einem digitalen Interfaceanschluss umfassen, die in eine Steckseite der Grundplatine mit einer Mehrzahl von Stecksockeln einsteckbar ist. Dabei kann die Steckseite den Daten- und Energiebus und den Stecksockel umfassen und die Grundplatine seitwärts ausgerichtet zumindest einen Gehäusewandkonnektor zur elektrischen Bindung mit einer Gehäusewand umfassen. Somit wird die Grundplatine des Kleinstsatelliten derart spezifiziert, dass sie planar als Basis für die Einsteckplatinen dient und mehrere Stecksockel umfasst. Eine einzelne I/O-Platine dient zur externen Kontaktierung des elektrischen Systems des Kleinstsatelliten und umfasst einen analogen und/oder digitalen Interfaceanschluss. Auf der Grundplatine ist der Daten- und Energiebus vorgesehen, der die einzelnen Stecksockel miteinander verbindet. Seitwärts, d.h. in der planaren Ebene der Grundplatine, ist zumindest ein, bevorzugt an verschiedenen Kantenseiten der Grundplatine, zwei, drei oder vier Gehäusewandkonnektoren vorgesehen, um eine Verbindung zu den angrenzenden Gehäusewänden herstellen zu können, die die Photovoltaikzellen, die Magnetfeldspulen und die Sonnen- oder Sternensensoren und auch optisehe Sensoren umfassen können, und die über den Energie- und Datenbus mit den Einsteckplatinen gekoppelt sein können. Hierdurch wird ein Stecksystem ermöglicht, bei dem adaptiv der Kleinstsatellit für die verschiedenen Aufgaben vorgerichtet werden kann. Die Gehäusewände können gegenseitig kontaktierbar sein, beispielsweise über Flachbandstecker, so dass ein einzelner Gehäusekonnektor zur Kontaktierung aller Gehäusewände genügen könnte.

In einer Weiterbildung der vorgenannten Ausführungsform kann die Einschubplatine zumindest eine Kommunikationsplatine (COMM), eine Rechnerplatine (OBDH), eine Energieversorgungsplatine (EPS) und/oder eine Lageregelungsplatine (ADCS) umfassen. In einer Gehäusewand sind zumindest eine Photovoltaikzelle und/oder zumindest eine Magnetfeldspule und/oder zumindest ein optischer Sensor und/oder eine Antenne umfasst, so dass der Gehäuserahmen zumindest Teile des Antriebssystems, insbesondere zumindest einen FEEP-Antrieb umfasst.

Diese Ausführungsform definiert eine Minimalzahl von Einschubplatinen, die zumindest eine Kommunikationsplatine, COMM - Communication, eine Rechnerplatine, OBDH - On-board Data Handling, eine Energieversorgungsplatine, EPS - Electrical Power System und/oder eine Lageregelungsplatine - ADCS Attitude Determination and Control System umfasst. Zumindest das OBDH, das On-board Computer System, ist zweifach redundant ausgelegt und das Electrical Power System EPS ist redundant und skalierbar zur Verteilung der elektrischen Energie auf die einzelnen Subsysteme des Kleinstsatelliten ausgelegt. Die COMM-Einsteckplatine ist ein vollständiges redundantes UHF-Kommunikationssubsystem zur Kommunikation mit benachbarten Kleinstsatelliten, aber auch zur Kommunikation mit einer Bodenstation, insbesondere zum Empfang von Steuerdaten und zum Versenden von Sensordaten. Das ADCS dient dazu, Lage und Antrieb des Kleinstsatelliten zu beeinflussen und umfasst beispielsweise eine Kollisionsvermeidungsvorrichtung.

In einem nebengeordneten Aspekt wird eine Formation aus mehreren Kleinstsatelliten vorgeschlagen, wobei Relativposition und Flugtrajektorie T*ₖ* jedes Kleinstsatelliten durch eine selbstständig und autark arbeitende Kollisionsvermeidungsvorrichtung veränderbar ist. Hierdurch wird ermöglicht, dass eine lokal konzentrierte Formation von Kleinstsatelliten, die dazu ausgelegt ist, eine lokal begrenzte Region der Erdoberfläche mit hoher Auflösung detektieren zu können, oder eine Formation von auf verschiedenen Erdumlaufbahnen verteilten Kleinstsatelliten, die sich beispielsweise in Nähe der Polregion über schneiden, derart zu steuern, dass keine Kollision zwischen den Kleinstsatelliten auftreten kann. Die Kollisionsvermeidungsvorrichtung kann eine bidirektionale Kommunikation zwischen den Kleinstsatelliten ermöglichen, um eine Kollisionsvermeidung zu erreichen und die Formation aufrechtzuerhalten, und kann eingerichtet sein, passive Fremdkörper zu detektieren, beispielsweise Weltraumschrott, Asteroiden, Kleinstmeteore oder andere Raumfahrzeuge, die keine bidirektionale Kommunikation unterstützen. Hierdurch ist es möglich, eine Formation von Kleinstsatelliten entlang eines LEO-Orbits mit hoher Lebensdauer und geringem Ausfallrisiko betreiben zu können.

In einer vorteilhaften Weiterbildung der Formation kann bei Überschreitung einer vorbestimmten Abweichung der Flugtrajektorie T*ₖ* eines Kleinstsatelliten durch eine Trajektorienkorrektur T*ₖₖ* von einer Formationstrajektorie T*_{S}* eine Einzeltrajektorienkorrektur T*ₖₖ* des Kleinstsatelliten oder eine Formationstrajektorienkorrektur T*_{Sk}* der weiteren in Formation befindlichen Kleinstsatelliten zur Beibehaltung oder Neuausrichtung der Formationstrajektorie T*_{S}* vornehmbar sein, wobei erfindungsgemäß die Kleinstsatelliten im bidirektionalen Austausch ihrer Relativlage und ihrer Flugtrajektorie T*ₖ* stehen. In dieser Weiterbildung wird vorgeschlagen, dass bei einer erheblichen Abweichung einer ursprünglichen Flugtrajektorie T*ₖ* durch eine Kollisionsvermeidungsstrategie, die eine Trajektorienkorrektur T*ₖₖ* auslöst, eine Rückkorrektur hinsichtlich einer Formationstrajektorie T*_{S}* vorgenommen werden kann, oder gegebenenfalls die Formationstrajektorie T*_{S}* für alle Kleinstsatelliten der Formation derart geändert wird, so dass die Formation beibehalten werden kann und eine Kollisionsvermeidung beispielsweise der gesamten Formation hierdurch bereitgestellt werden kann. Dabei ist es sinnvoll und vorteilhaft, wenn die Kleinstsatelliten im bidirektionalen Austausch stehen und ihre Relativlage und ihre Flugtrajektorie T*ₖ* oder ihre Trajektorienkorrektur T*ₖₖ* mitteilen, so dass entschieden werden kann, ob die Formationstrajektorie T*_{S}* geändert werden kann, oder ob eine Einzeltrajektorienkorrektur T*ₖₖ* den ausweichenden Satelliten wieder in der Formation auf seinen ursprünglichen Platz rückbefördert, so dass die Formation beibehalten werden kann.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: in einer skizzenhaften Darstellung eine erste Ausführungsform einer Formation von erfindungsgemäßen Kleinstsatelliten,
- **Fig. 2**: in einer weiteren perspektivischen Darstellung eine weitere Ausführungsform einer Formation von Kleinstsatelliten gemäß der Erfindung,
- **Fig. 3**: eine schematische Darstellung einer Kollisionsvermeidungsvorrichtung einer Ausführungsform eines erfindungsgemäßen Kleinstsatelliten,
- **Fig. 4**: schematisch in einem Blockdiagramm eine Kollisionsvermeidungsvorrichtung einer Ausführungsform eines erfindungsgemäßen Kleinstsatelliten,
- **Fig. 5**: eine Sprengdarstellung einer Ausführungsform eines Kleinstsatelliten gemäß der Erfindung,
- **Fig. 6**: eine Detaildarstellung einzelner Ausbaustufen einer Ausführungsform eines Kleinstsatelliten gemäß der Erfindung,
- **Fig. 7**: die Grundplatine einer Ausführungsform eines erfindungsgemäßen Kleinstsatelliten,
- **Fig. 8**: einzelne Einsteckplatinen und Gehäusebestandteile einer Ausführungsform eines Kleinstsatelliten gemäß der Erfindung,
- **Fig. 9**: Darstellungen von Einsteckplatinen für verschiedene Funktionen einer Ausführungsform eines Kleinstsatelliten der Erfindung,
- **Fig. 10**: ein Bordrechner einer Ausführungsform eines Kleinstsatelliten gemäß der Erfindung,
- **Fig. 11**: ein Blockdiagramm einer Watchdogeinrichtung einer Ausführungsform eines Kleinstsatelliten gemäß der Erfindung,
- **Fig. 12**: eine schematische Darstellung eines Energieversorgungssystems einer Ausführungsform eines Kleinstsatelliten gemäß der Erfindung.

In den Figuren sind gleichartige Elemente mit gleichen Bezugszeichen beziffert. Die Figuren zeigen lediglich Beispiele und sind nicht beschränkend zu verstehen.

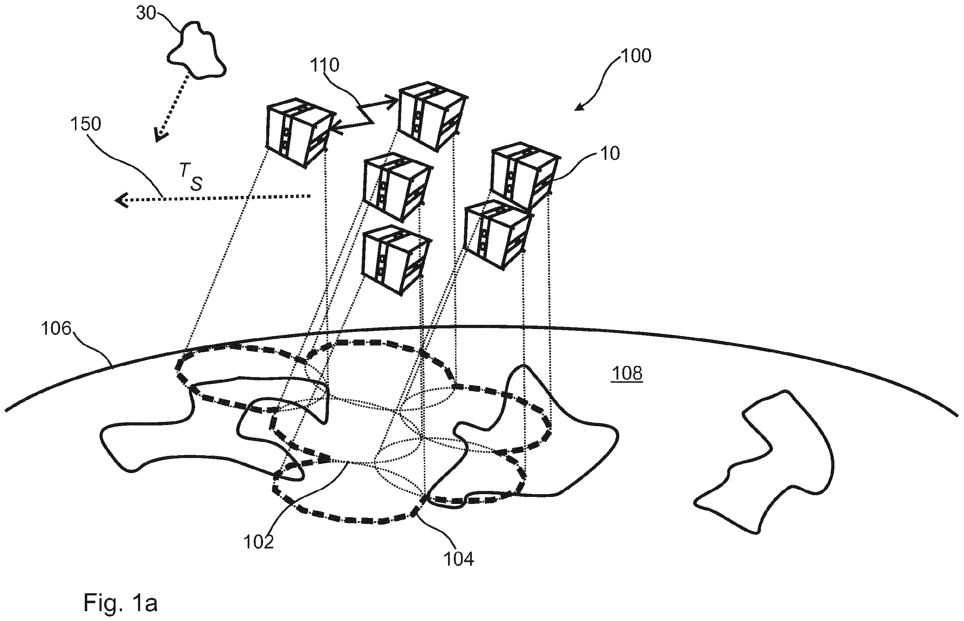

In der Fig. 1a ist eine Formation 100 von Kleinstsatelliten 10 dargestellt. Die Formation 100 umfasst mehrere räumlich benachbarte Kleinstsatelliten 10, von denen jeder Kleinstsatellit eine Erdbeobachtung einer Erdoberfläche 108 bis zu einem Erdhorizont 106 innerhalb eines Einzelerfassungsbereichs 102 vornehmen kann. Durch eine Kombination der Einzelerfassungsbereiche 102 jedes Kleinstsatelliten 10 kann ein größerer Formationserfassungsbereich 104 abgedeckt werden, der einen relativ großen Oberflächenbereich der Erde kartografieren kann. Der Schwerpunkt der Formation 100 bewegt sich entlang einer Orbitalbahn 150 T*_{S}* über der Erdoberfläche 108.

In diesem Darstellung ist die Formation 100 als eine räumlich begrenzte Aggregation von Kleinstsatelliten 10 ausgebildet, um einen großen Erdoberflächenbereich 104 durch Kombination von Einzelerfassungsbereichen 102 kartografieren zu können. Somit können große Bereiche der Erdoberfläche 108 bis zum Erdhorizont 106 aufgenommen werden. Zwischen den einzelnen Satelliten 10 ist ein bidirektionaler Austausch 110 von Relativlage und Trajektorie der Einzelsatelliten 10 etabliert. Kommen sich Einzelsatelliten 10 zu nahe oder kreuzt ein Fremdkörper 30, so kann jeder Satellit, aber auch die gesamte Formation 100 eine Kollisionsvermeidungsstrategie verfolgen und Ausrichtung und Einzeltrajektorie derart steuern, dass dem Fremdkörper 30 ausgewichen werden kann. Dadurch kann sich die Orbitalbahn 150 T*_{S}* ändern und kann gegebenenfalls nachträglich wieder korrigiert werden, um eine vorgewählte Orbitalbahn weiter verfolgen zu können.

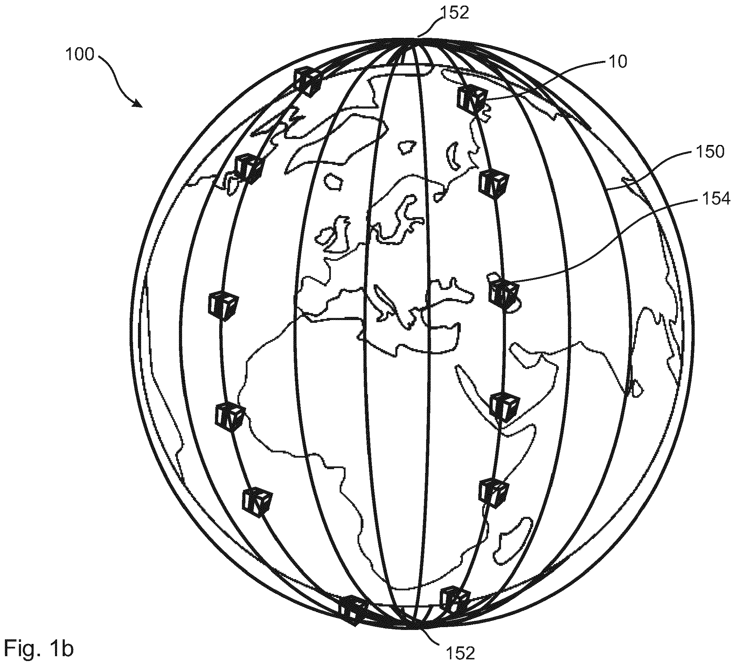

In der Fig. 1b ist eine weitere Formation 100 von Kleinstsatelliten 10 entlang einer polaren Orbitalbahn 150 dargestellt. Dabei umkreisen eine Perlenschnur 154 von Kleinstsatelliten 10 entlang einer Orbitalbahn 150 die Erde, wobei eine Mehrzahl von Orbitalbahnen 150 entlang der Längengrade vorgesehen sein können und somit mehrere Perlenschnüre 154 von Kleinstsatelliten 10 die Erde umkreisen können. An den Polen 152 begegnen sich die Kleinstsatelliten 10 der einzelnen Orbitalbahnen 150, so dass es dort zu einer erhöhten Kollisionswahrscheinlichkeit kommt. Insbesondere in der Polnähe 152 ist somit der Einsatz einer Kollisionsvermeidungsvorrichtung 18 sinnvoll, um gezielte Ausweichmanöver der einzelnen Kleinstsatelliten 10 zueinander zu ermöglichen. Hierbei kann ein bidirektionaler Datenaustausch 110 zwischen den sich begegnenden Kleinstsatelliten 10 der verschiedenen Orbitalbahnen 150 sinnvoll sein, um mit einem möglichst geringen Energieaufwand eine Kollisionsvermeidung erreichen zu können.

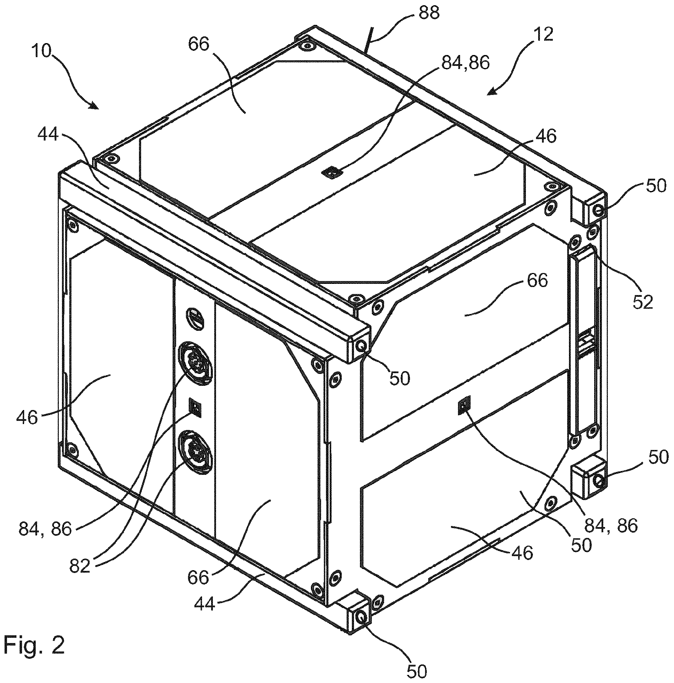

Die Fig. 2 zeigt eine erste Ausführungsform eines Kleinstsatelliten, der im Wesentlichen einen quaderförmigen Aufbau besitzt. Der Kleinstsatellit 10 umfasst ein Gehäuse 12, das sich aus sechs Gehäusewänden 46 sowie 4 stabrahmenartigen Gehäuseträgern 44 zusammensetzt. Jeder der Gehäusewände 46 weist zwei Photovoltaikzellen 66 auf, die beabstandet zueinander angeordnet sind, und in deren Zwischenraum beispielsweise Körpererkennungssensoren 84 in Form von optischen Sensoren 86, Sternensensoren oder Sonnensensoren angeordnet sein können. Des Weiteren gibt der Zwischenraum zwischen den Photovoltaikzellen 66 die Möglichkeit, mittels einer I/O-Platine 78 Interfaceanschlüsse 82 zur Kontaktierung und Programmierung oder zum Auslesen von Daten vor einem Orbitalstart anschießen zu können. Des Weiteren ist zumindest in einem Eckbereich des kantenförmigen Gehäuses 12 eine Antenne 88 für Funkempfang, insbesondere für UHF-Empfang vorgesehen, mit dem ein Kontakt zu einer Bodenstation, aber auch zu benachbarten Kleinstsatelliten 10 hergestellt werden kann.

Zumindest vier Kanten des Gehäuses 12 werden von Rahmenträgern 44 ausgebildet, die einen Gehäuserahmen definieren. In jedem Rahmenträger 44 kann ein FEEP-Antrieb 50 an einer stirnseitigen Ausgangsfläche angeordnet sein, wobei jeder Rahmenträger 44 ein Hohlprofil aufweisen kann, und in dieser Hohlkammer kann Treibstoff für den FEEP-Antrieb gelagert sein. Insbesondere kann der Treibstoff vor dem Start tiefgekühlt sein, und somit den Hohlrahmen mechanisch ausfüllen und zur mechanischen Stabilität des Gehäuserahmens beitragen. Im Orbit kann am Gehäuserahmen eine Heizung vorgesehen sein, um den Treibstoff zu erwärmen und damit flüssig zu machen, um eine Treibstoffzufuhr zum FEEP-Antrieb 50 bereitstellen zu können. Jeder der vier Rahmenträger 44 bildet ein eigenständiges Antriebssystem für den Kleinstsatelliten 10 aus, so dass allein durch Ansteuern eines einzelnen FEEP-Antriebs 50 sowohl ein Impuls als auch eine Drehrichtungsänderung der Lage des Kleinstsatelliten 10 erreicht werden kann. Durch gleichzeitiges Aktivieren aller FEEP-Antriebe 50 kann ein geradliniger Impuls entlang der Flugtrajektorie T*_{K}* des Kleinstsatelliten 10 erzeugt werden. Im nach innen gerichteten, abgewandten Teil jeder Gehäusewand 46 können Magnetfeldspulen 38 einer Magnettorquereinrichtung 116 und auch ein Magnetometer angeordnet sein, um eine Ausrichtung am Magnetfeld oder eine Lage des Magnetfelds relativ zur Lage des Kleinstsatelliten 10 messen zu können. Hierdurch kann ein äußerst kompaktes Design geschaffen werden, das im Startzustand robust ist und mit möglichst geringem Volumen und Gewicht eine Anordnung der einzelnen Funktionsbauteile im Inneren des Satelliten erlaubt.

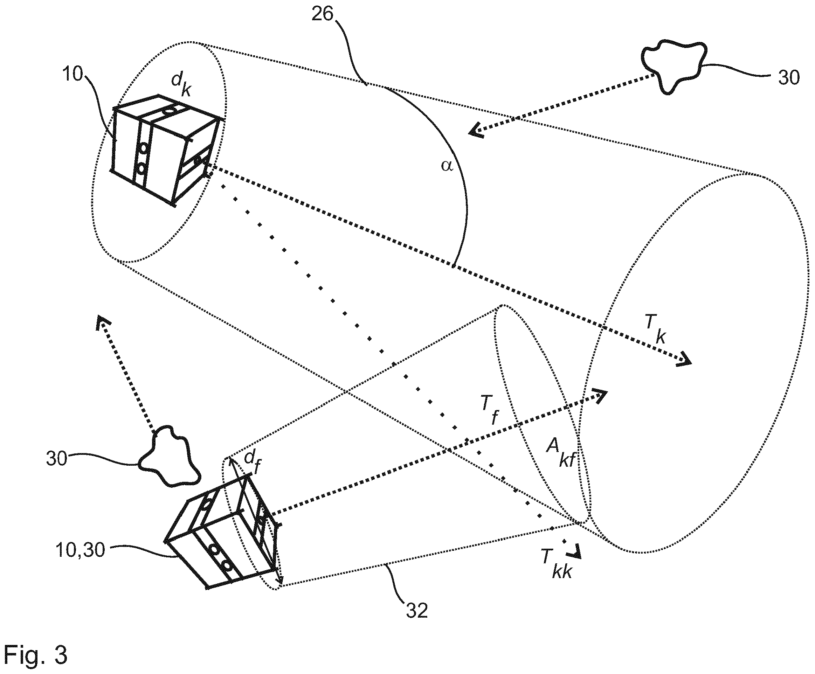

In der Fig. 3 ist ein erstes Ausführungsbeispiel eines Antikollisions- und Relativnavigationsverfahrens dargestellt. Ein Kleinstsatellit 10 kann mittels Körpererkennungssensoren 84 einen Fremdkörper 30 oder einen weiteren Kleinstsatelliten 10 erfassen, wobei zumindest eine Relativgeschwindigkeit und eine Relativtrajektorie bestimmt werden können. Der Fremdkörper 30 kann beispielsweise ein Asteroid oder Weltraumschrott, beispielsweise Teile einer abgebrannten Raketenstufe oder Teile von künstlichen Himmelskörpern sein. Die Kollisionsvermeidungsvorrichtung 18 erzeugt einen Kollisionsschlauch 26 mit einem Durchmesser D*ₖ*, der ein Mehrfaches des Durchmessers des Kleinstsatelliten 10 beträgt und diesen somit umfasst. Der Kollisionsschlauch 26 weist weiterhin einen Aufweitungswinkel α auf, der in Abhängigkeit der Relativgeschwindigkeit zwischen dem Kleinstsatelliten 10 und einem Fremdkörper 30 oder einem benachbarten Kleinstsatelliten 10 aufgeweitet werden kann, um den Koallitionsschlauch zu vergrößern oder zu verkleinern. Die Kollisionsvermeidungsvorrichtung 18 bestimmt des Weiteren die Trajektorie T*_{f}* des Kleinstsatelliten 10 oder des Fremdkörpers 30 und definiert einen Fremdkörperschlauch 32, der mit einem Durchmesser D*_{f}* zum einen die Größe des Fremdkörpers 30 oder benachbarten Kleinstsatelliten 10 umfasst, zum anderen ebenfalls einen Aufweitungswinkel aufweist, der in Abhängigkeit der Relativgeschwindigkeit zwischen dem Kleinstsatelliten 10 und dem Fremdkörper verändert werden kann, wobei eine hohe Relativgeschwindigkeit und/oder eine abnehmende Entfernung einen vergrößerten Winkel der einzelnen Schläuche zur Folge hat.

Die Kollisionsvermeidungsvorrichtung 18 kann ein Durchsetzen von Kollisionsschlauch 26 und Fremdkörperschlauch 32 berechnen, und hieraus eine Kollisionsgefahr detektieren. In diesem Fall würde bei Weiterverfolgung der Trajektorie T*ₖ* und unter der Annahme, dass der Fremdkörper seine bestimmte Eigentrajektorie T*_{f}* weiterverfolgt, eine Kollision nicht ausgeschlossen werden. Aus diesem Grund bestimmt die Kollisionsvermeidungsvorrichtung 18 eine Trajektorienkorrektur T*ₖₖ*, so dass sich Fremdkörperschlauch 32 und Kollisionsschlauch 26 nicht weiter überlappen. Hierdurch kann das Antriebs- und Lagesystem 16, das insbesondere eine Lageregelung und eine Antriebsregelung der Triebwerke umfasst, derart gesteuert werden, dass mit minimalem Energieaufwand die Trajektorienkorrektur T*ₖₖ* erfolgen kann. Hierdurch kann effektiv eine Kollision mit Fremdkörpern 30, die möglicherweise der Flugbahn des Kleinstsatelliten 10 zu nahe kommen, ausgeschlossen werden.

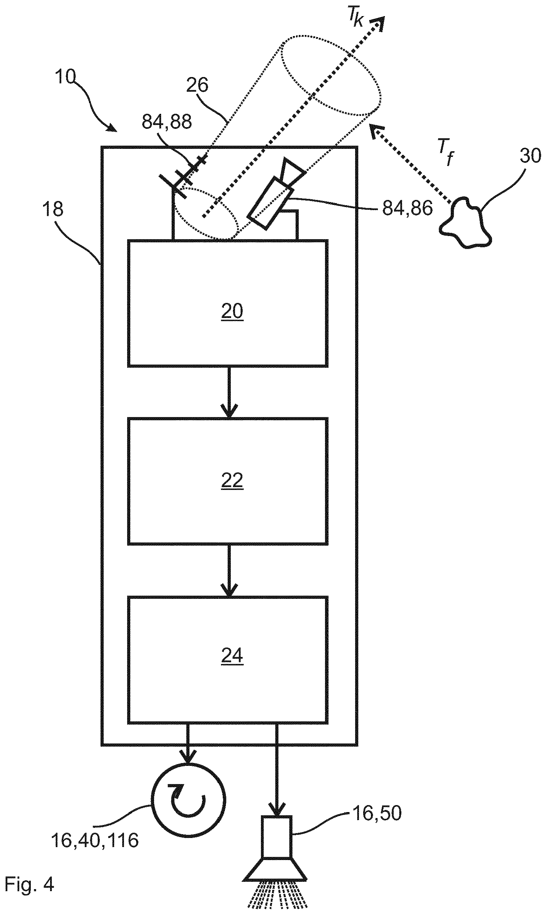

Die Fig. 4 zeigt eine weitere Ausführungsform der Kollisionsvermeidungsvorrichtung 18 des Kleinstsatelliten 10. Die Kollisionsvermeidungsvorrichtung 18 umfasst eine Körperortungseinrichtung 20, an der Körpererkennungssensoren 84 beispielsweise optische Sensoren 86 oder eine Antenne 88 als Funk- oder Radarsensor angeordnet sein kann. Der optische Sensor 86 kann beispielsweise eine optische Kamera, und/oder eine Infrarotkamera sein. Die Körperortungseinrichtung 20 berechnet einen Kollisionsschlauch 26 entlang der Flugbahn, die auch als Flugtrajektorie T*ₖ* bezeichnet wird. Des Weiteren kann durch die Körpererkennungssensoren 84 ein in der Nähe befindlicher Fremdkörper 30 erkannt werden, und durch Beobachtung der relativen Abstandsänderung zum Fremdkörper 30 dessen Trajektorie T*_{f}* bestimmt werden. Ausgehend von der Kenntnis der eigenen Flugtrajektorie T*ₖ* und der Fremdkörpertrajektorie T*_{f}* kann der Kollisionsschlauch 26 und ein Fremdkörperschlauch 32 bestimmt werden. In der Kollisionsprädiktionseinrichtung 22 kann der Kollisionsschlauch 26 mit dem Fremdkörperschlauch 32 verglichen werden und eine Durchsetzung dieser Schläuche kann erkannt werden, wonach eine Veränderung der Flugtrajektorie T*ₖ* geboten ist, um eine Kollision zu vermeiden.

Erkennt die Kollisionsprädiktionseinrichtung 22 die Gefahr einer Kollision, kann eine Ausweicheinrichtung 24 eine energieminimale Trajektorienkorrektur T*ₖₖ* bestimmen, durch die mit möglichst geringem Energieverbrauch und Richtungsänderung eine Lage- und Schubkorrektur vorgenommen werden kann, so dass der Kollisionsschlauch 26 nicht mehr vom Fremdkörperschlauch 32 durchsetzt wird. Die Ausweicheinrichtung 24 bestimmt hierzu Steuerinformationen zur Steuerung des Antriebs- und Lagesystems 16, insbesondere eines Reaktionsrades 40 zur Änderung der Relativlage oder Magnettorquer 116, um die Ausrichtung des Kleinstsatelliten 10 zu verändern, und hiernach mittels eines FEEP-Antriebs 50 einen Impuls auf den Kleinstsatelliten 10 zu geben, so dass die Trajektorienkorrektur T*ₖₖ* eingestellt wird. Somit kann eine Kollision mit benachbarten Fremdkörpern 30 vermieden werden. Handelt es sich bei dem Fremdkörper 30 um einen weiteren Kleinstsatelliten 10, so wird durch eine bidirektionale Kommunikation 110 zwischen den Kleinstsatelliten 10, Relativlage und Trajektorie der Kleinstsatelliten 10 ausgetauscht, und ein abgestimmtes Verhalten zur Vermeidung einer Kollision zwischen den Kleinstsatelliten 10 ausgehandelt.

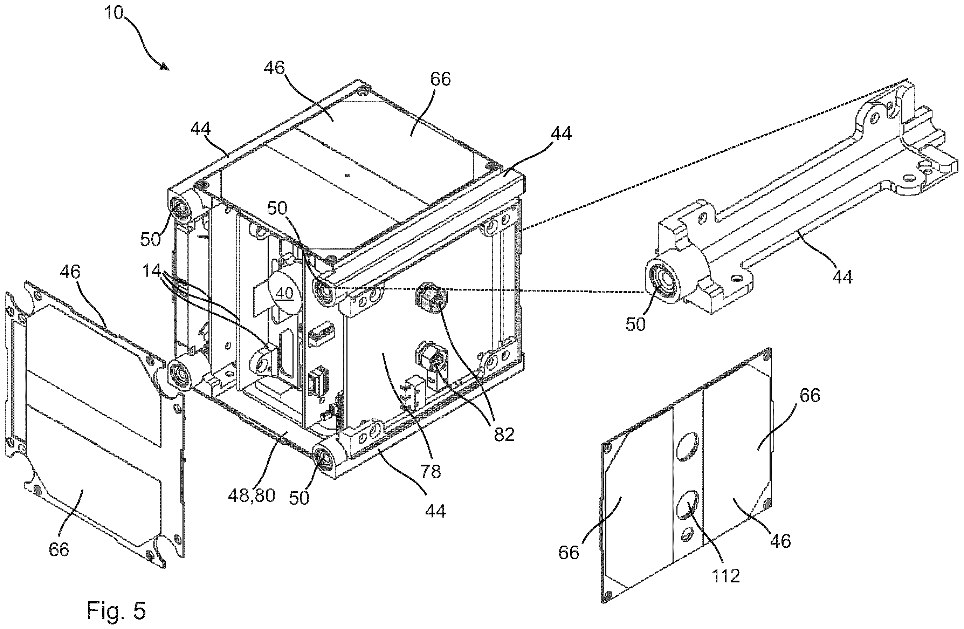

In der Fig. 5 ist eine Explosionszeichnung des in Fig. 2 dargestellten Kleinstsatelliten 10 dargestellt. Der Kleinstsatellit 10 umfasst sechs Gehäusewände 46, auf denen Photovoltaikzellen 66 angeordnet sind, wobei zwischen zwei benachbarten Photovoltaikzellen 66 ein mittlerer bandförmiger Bereich ausgespart ist, in denen eine Sensorik untergebracht werden kann. Es ist möglich, Körpererkennungssensoren 84 wie Kamera oder Radarsensoren in diesem Bereich anzuordnen. Die sechs Gehäusewände 46 sind an vier Rahmenträger 44 befestigt, wobei jeder Rahmenträger 44 einen Lichtbogenantrieb 50 umfasst und in einem Hohlraumprofil des Rahmenträgers 44 der Treibstoff gelagert ist. Jeder Rahmenträger 44 kann eine elektrische Heizung umfassen, die es ermöglicht, Treibstoff im Rahmenträger 44 zu erwärmen, um für den Betrieb des Lichtbogenantriebs 50 die notwendige Treibstoffversorgung bereitstellen zu können. Im Inneren des Kleinstsatelliten 10 ist eine Grundplatine 48 angeordnet, die Stecksockel auf einer Steckseite 80 aufweist, in denen Einschubplatinen 14 eingesteckt sind. Jede Einschubplatine 14 kann unterschiedliche Aufgaben aufweisen, und beispielsweise die Energieversorgung, die Lageregelung, einen übergeordneten Prozessrechner oder eine Kommunikationsfunktion bereitstellen. Des Weiteren ist eine I/O-Platine 78 in der Grundplatine 48 eingesteckt, die I/O-Interfaceanschlüsse 82 zur externen Programmierung und Auslese von Daten vor dem Start aufweist. Die Interfaceanschlüsse 82 können beispielsweise einen analogen und einen digitalen Anschluss aufweisen, um sowohl analoge als auch digitale Daten ein- und auslesen zu können.

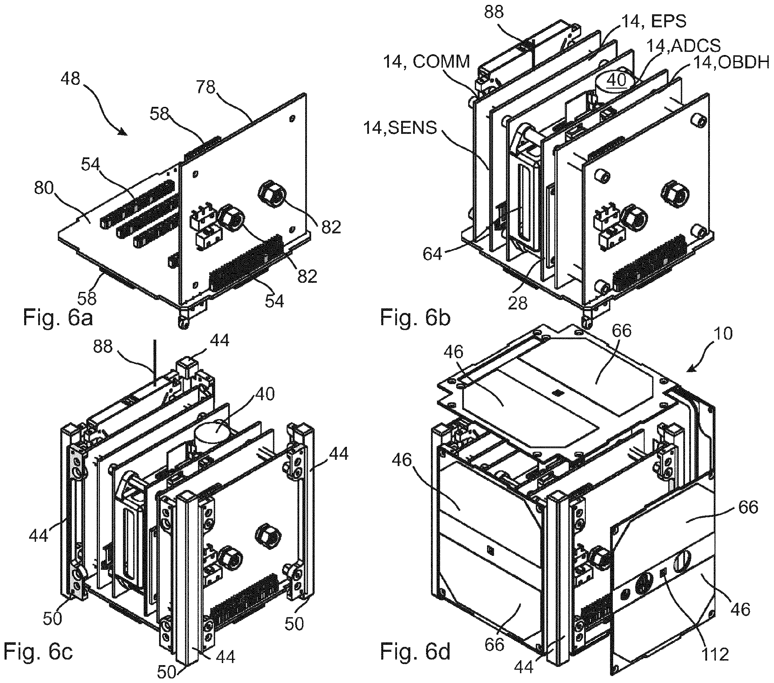

In der Fig. 6 sind in Einzelfiguren 6a bis 6d Montageschritte einer Ausführungsform eines erfindungsgemäßen Kleinstsatelliten 10 dargestellt. In der Fig. 6a ist die Grundplatine 48 mit der Steckseite 80 dargestellt, auf der einzelne Stecksockel 54 angeordnet sind, die durch einen Daten- und Energiebus 56 miteinander verbunden sind. An einem äußersten Stecksockel 54 ist eine I/O-Platine 78 eingestellt, der zwei I/O-Interfaceanschlüsse 82 bereitstellt, mit der vor dem Start der Kleinstsatellit programmiert werden kann. Sowohl die Grundplatine 48 als auch die I/O-Platine 78 weist Gehäusewandkonnektoren 58 auf, die in der Lage sind, umliegende Gehäusewände 46 elektrisch zu kontaktieren, um beispielsweise Strom aus dem darauf befindlichen Photovoltaikzellen 66 abzugreifen als auch Magnetspulen, die als Magnettorquer oder auch als Magnetometer dienen können, anzusprechen.

In der Fig. 6b sind weitere Einsteckplatinen 14, insbesondere eine EPS-Platine zur Bereitstellung einer Energieversorgung, eine ADCS-Platine zur Bereitstellung einer Lage- und Antriebssteuerung, eine OBDH-Platine zur Bereitstellung einer übergeordneten Rechnerfunktionalität und eine COMM-Platine zur Bereitstellung einer Kommunikationsfähigkeit eingesteckt. Des Weiteren ist eine Sensorplatine SENS zur Bereitstellung einer Sensorfähigkeit, beispielsweise für Erdbeobachtung, Wetterbeobachtung oder diverse Überwachungsfunktionalitäten in das modulare System der Grundplatine 48 eingesteckt.

In der Fig. 6c wird eine weitere Ausbaustufe gezeigt, in denen die Rahmenträger 44 rechtwinklig zur Grundplatine 48 parallel zu den Kanten der Einsteckplatine 14 angeordnet sind. Des Weiteren ist ein Reaktionsrad 40, das sich auf der ADCS-Platine befindet, sichtbar, sowie eine Antenne 88, die auf der COMM-Platine angeschlossen ist, dargestellt. Die einzelnen Funktionsplatinen 14 sind mittels Stabilisierungselementen 28 als Verschraubungsbolzen miteinander verbunden, die zusätzlich

Schließlich zeigt die Fig. 6d die Montage der Gehäusewände 46, auf denen Photovoltaikzellen angeordnet sind, und die des Weiteren Körpererkennungssensoren 84 und Gehäusewandausnehmungen 112, beispielsweise für den Anschluss der I/O-Interface-Anschlüsse 82 umfassen. Die Gehäusewände 46 stellen eine regenerative Energieversorgung mittels Photovoltaikzellen 66 bereit, und beinhalten Teile der Lageregelung mit Magnetfeldspulen 38 einer Magnettorquereinrichtung 116 auf ihrer Gehäuserückwand sowie Magnetometer und Sensorikelemente zur Beobachtung der näheren Umgebung in Trajektorienrichtung für die Kollisionsvermeidung und zur Erfassung einer relativen Lage sowie Sternen- und Sonnensensor. Die Trajektorienrichtung befindet sich gegenüberliegend der Gehäuseseite, an der der Lichtbogenantrieb angeordnet ist.

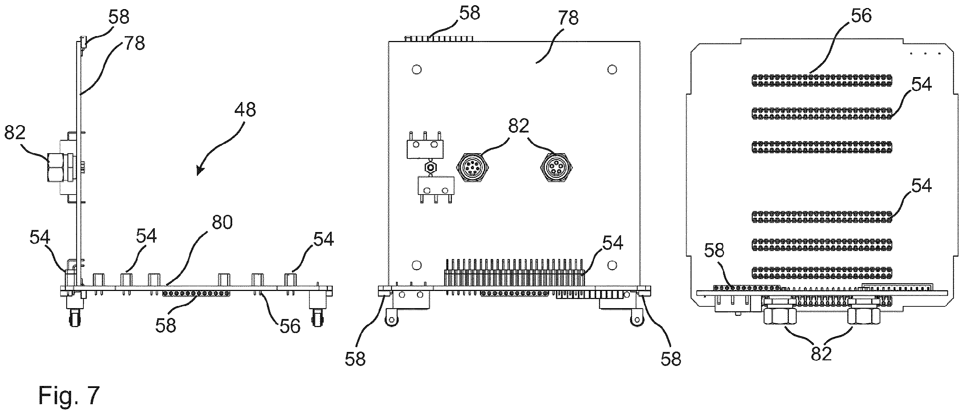

In der Fig. 7 ist in einer 3-Tafel-Projektion der Aufbau der Grundplatine 48 und der I/O-Interfaceplatine 78, die das Grundgerüst des Kleinstsatelliten 10 bildet, dargestellt. Die Grundplatine 48 weist mehrere Stecksockel 54 auf, in denen unterschiedliche Einschubplatinen 14 eingesteckt werden können. Die Stecksockel 54 sind auf einer Steckseite 80 der Grundplatine 48 angeordnet. Auf der Unterseite der Grundplatine 48 ist ein Daten- und Energiebus 56 angeordnet, der die einzelnen Kontakte der Stecksockel 54 miteinander verbindet. An einem Stecksockel 54 an der Kante der Grundplatine 48 ist eine I/O-Platine 78 eingesteckt. Diese umfasst I/O-Interfaceanschlüsse 82 zum Programmieren und Auslesen von Daten des Kleinstsatelliten 10 vor dem Start und dient zur Konfiguration, Programmierung und zum Testen der Funktionsfähigkeit des elektrischen Systems. Die Grundplatine 48 und die I/O-Interfaceplatine 78 weist Gehäusewandkonnektoren 58 zum elektrischen Kontaktieren der Gehäusewände 46 auf, um die Energie- und Sensor- und Aktuatorsysteme der Gehäusewände 48 elektrisch verbinden zu können.

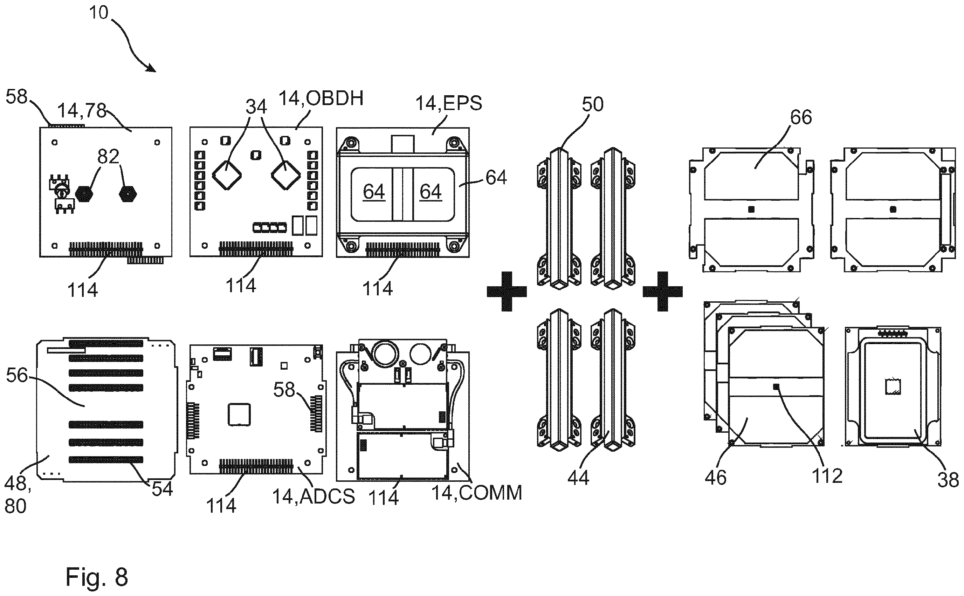

In der Fig. 8 sind die einzelnen Bauteilgruppen des Kleinstsatelliten 10 als Bauteilset dargestellt. Das Bauteilset setzt sich aus fünf Einschubplatinen 14 und einer Grundplatine 48 zusammen, die die Standardkonfiguration des Kleinstsatelliten 10 darstellt. Die Grundplatine 48 weist mehrere Stecksockel 54 auf, die durch einen Daten- und Energiebus 56 miteinander verbunden sind. Die einzelnen Einschubplatinen 14 sind eine I/O-Platine 78 mit I/O-Interfaceanschlüssen 82 zum elektrischen Kontaktieren des Kleinstsatellitensystems sowie eine OBDH-Platine, die zwei Funktionskerne 34 aufweist, eine EPS-Platine mit einem Akkumulator 64 zur Bereitstellung einer Energieversorgung, eine ADCS-Platine zur Lageregelung und eine COMM-Platine mit einem HF-Teil zum Senden und Empfangen von Daten mittels Funkwellen. Jede der Einschubplatinen 14 weist eine gleichkonfigurierte Steckerleiste 114 auf, die in einen Stecksockel 54 der Grundplatine 48 eingesteckt werden kann. Zusätzlich sind vier Rahmenträger 44 angeordnet, wobei jeder Rahmenträger einen Lichtbogenantrieb 50 integriert, der das Haupttriebwerk des Kleinstsatelliten 14 darstellt. Des Weiteren sind sechs Gehäusewände 46 vorgesehen, die an ihrer Außenseite jeweils zwei Photovoltaikzellen 66 aufweisen, die gegeneinander beabstandet sind, um so Platz für eine Sensorik, insbesondere Körpererkennungssensoren 84, und Ausnehmungen 112 für die Kontaktierung von I/O-Interfaceanschlüsse 82 zu bieten. Auf der Rückwand der Gehäusewände 46 sind Magnetfeldspulen 38 angebracht, die sowohl Teil eines Magnettorquers als auch als Magnetometer verwendet werden können, um die Lage des magnetischen Feldes der Erde zu messen, und mittels Stromfluss die Lage des Kleinstsatelliten 66 gegenüber den Erdmagnetfeldlinien ausrichten zu können. Durch Gehäusewandausnehmungen 112 können die I/O-Interfaceanschlüsse 82 kontaktiert werden, aber auch Sensoren, die beispielsweise auf einer Einschubplatine 14 angeordnet sind, nach außen gerichtet sein.

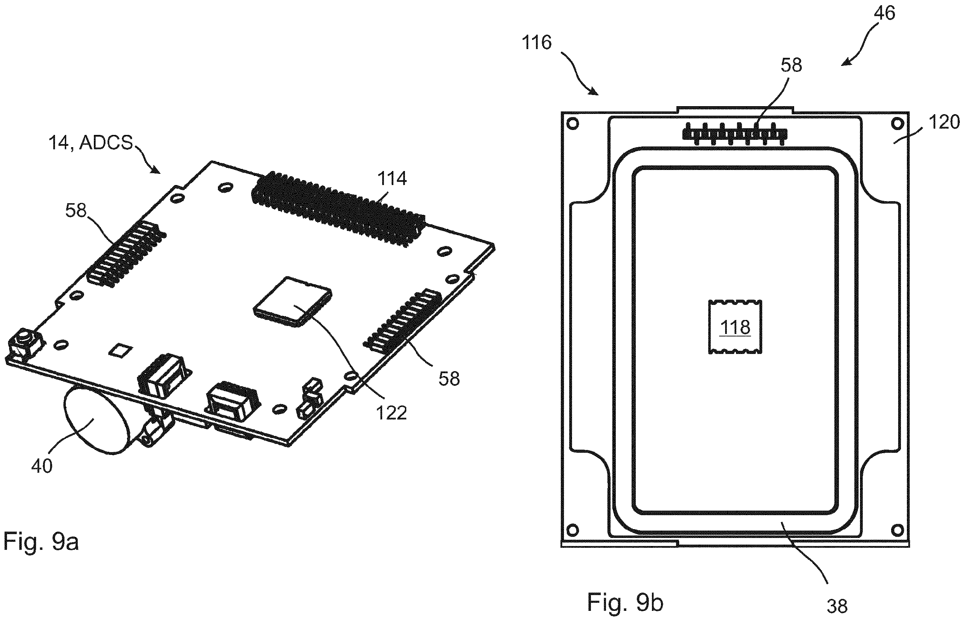

In der Fig. 9a ist die Einschubplatine ADCS näher dargestellt. Diese umfasst ein Reaktionsrad 40, mit der entlang einer Achsenlage ein Impuls zur Änderung der Orientierung des Kleinstsatelliten 10 erzeugt werden kann. Hierzu ist eine entsprechende Steuereinheit 122 der Lageregelung vorgesehen, die gleichwohl redundant ausgelegt sein kann, und die über eine Watchdogeinrichtung 36 überwacht werden kann, so dass eine erhöhte Robustheit und Strahlungssicherheit des ADCS-Systems ermöglicht werden kann. An zwei gegenüberliegenden Außenkanten der Einschubplatine 14 sind Gehäusewandkonnektoren 58 angeordnet und mittels einer Steckerleiste 114 kann der Energie- und Datenbus 56 der Grundplatine 48 kontaktiert werden.

Die Fig. 9b zeigt die Rückseite einer Gehäusewand 46, die sandwichartig aufgebaut ist und in ihrem Inneren einen Aluminiumkern 120 zur Erhöhung der Stabilität und zur Kühlung und Abschirmung besitzt. Der Aluminiumkern 120 dient zur Erhöhung der mechanischen Steifigkeit und schützt in geringem Maße vor Strahlung und dient zur Ableitung von thermischer Energie. Auf der Vorderseite der Gehäusewand 46 sind zwei Photovoltaikzellen 66 angeordnet und auf der Rückseite ist eine Magnetfeldspule 38 angeordnet, die mit einer Magnetspulen-Steuereinheit 118 in Verbindung steht. Die Magnetspulen-Steuereinheit 118 kann die Magnetspule 38 als Magnettorquereinrichtung 116 betreiben und somit eine Ausrichtung der Lage des Kleinstsatelliten entlang des Magnetfelds der Erde erreichen, als auch als Magnetometer dienen, um einen magnetischen Lagesensor bereitstellen zu können. An den vier Eckbereichen der Gehäusewand 46 tritt ein mechanisch verstärkter Aluminiumkern 120 hervor, um die mechanische Stabilität der Gehäusewand 46 bereitstellen zu können, die sowohl zur Energieversorgung als auch zur Lageregelung des Kleinstsatelliten 10 mittels der Magnettorquereinrichtung 116 ausgerüstet ist. Zumindest an einer Längs- und einer Querseite der Gehäusewand 46 sind Gehäusewandkonnektoren 58 angeordnet, um benachbarte Gehäusewände 46 sowie die im Inneren befindliche Grundplatine 48 und/oder eine Einschubplatine 14 elektrisch kontaktieren zu können.

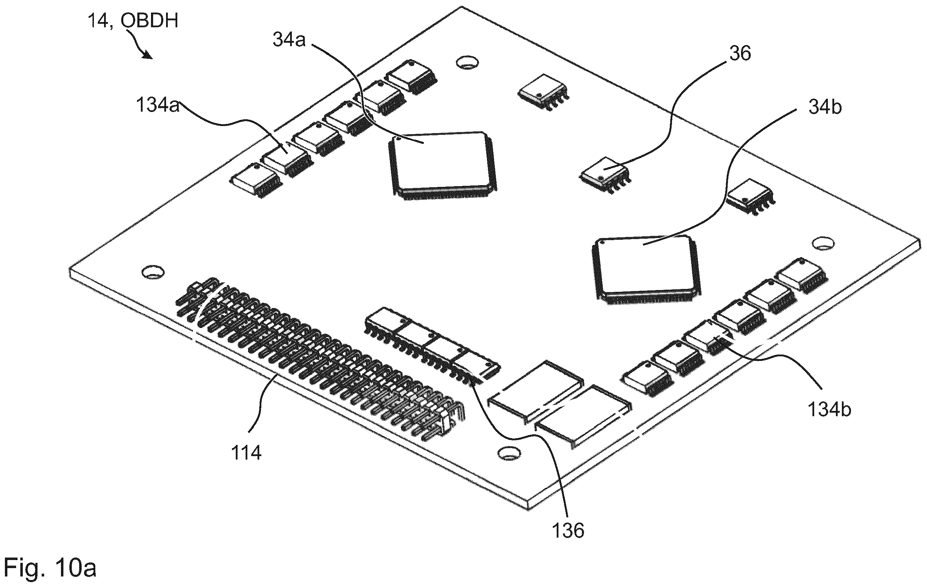

In der Figur 10a ist in einer perspektivischen Darstellung eine Einschubplatine 14 des OBDH, des On-Board-Data-Handling-Systems, d. h. des übergeordneten Prozessrechners dargestellt. Der OBDH umfasst zwei funktional gleich aufgebaute Funktionskerne 34a, die jeweils über eigene Speichereinrichtungen 134a und 134b verfügen. Eine Watchdogeinrichtung 36 überwacht die korrekte Funktion der beispielsweise im Master-Slave-Betrieb arbeitenden beiden Funktionskerne 34a und 34b, und kann im heißen Betrieb zwischen diesen beiden Funktionskernen 34a und 34b umschalten, sowie einen oder beide Funktionskerne 34a, 34b resetten, um einen zuverlässigen Betrieb gewährleisten zu können. Die Kontaktierung des Daten- und Energiebusses 56 der Grundplatine 48 erfolgt mittels einer Steckerleiste 114.

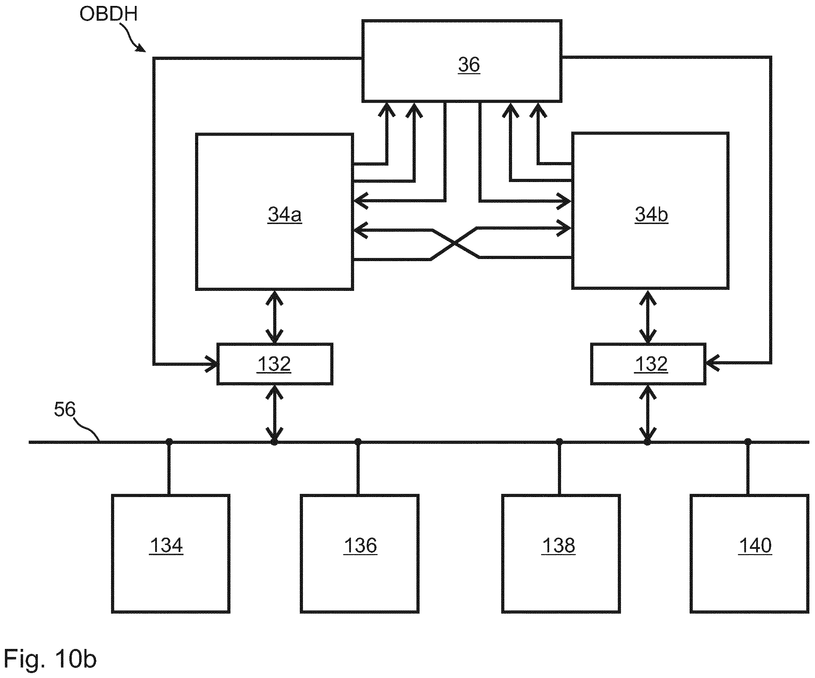

In der Fig. 10b ist ein Blockschaltdiagramm die funktionale Aufteilung des OBDHs dargestellt. Die beiden Funktionskerne 34a und 34b stehen miteinander in Verbindung und können Daten und Speicherinformationen austauschen. Eine übergeordnete Watchdogeinrichtung 36 überwacht die Ein- und Ausgabedaten der beiden Funktionskerne 34 und deren korrektes Arbeiten und kann beispielsweise Testabläufe initiieren, und Abweichungen zwischen den Funktionskernen 34a, 34b feststellen, die auf ein inkonsistentes Verhalten hinweisen. Dabei kann einer oder beide Funktionskerne 34a, 34b neu gebootet werden, beispielsweise hardwaremäßig oder softwaremäßig resettet werden oder es können Ergebnisse einer der beiden Funktionskerne 34a, 34b korrigiert werden. Die Funktionskerne 34a, 34b können im Master-Slave-Betrieb oder einzeln und autonom betrieben werden oder auch synchron, parallel und unabhängig voneinander arbeiten. Die Funktionskerne 34a, 34b sind über Abkopplungseinrichtungen 132 an den Daten- und Energiebus 56 angeschlossen. An diesem Daten- und Energiebus 56 können des Weiteren Speichereinrichtungen 134, Zeit- und Taktgebereinrichtungen 136, das Gehäuserückwandinterface 138 und Sensor- oder Aktuatoreinrichtung 140, wie beispielsweise ein Antrieb und Lagesystem 16 sowie Funk- oder optische Sensoren angeschlossen sein. Gleichwohl können einzelne dieser Komponenten auch auf der Einsteckplatine 14 angeordnet sein. Die Funktionskerne 34a, 34b können von der Watchdogeinrichtung 36 funktional vom Bordsystem getrennt und neu gestartet werden. Dabei kann die Watchdogeinrichtung 36 nach einem FDIR-Algorithmus arbeiten, um eine hohe Robustheit und Strahlungshärte auch ohne konventionelle Abschirmtechniken gegen die Weltraumstrahlung erreichen zu können.

Die Watchdogeinrichtung 36 kann mehrstufig arbeiten und zum Beispiel in einer ersten Stufe softwaremäßig die einzelnen Funktionskerne resetten. In einer zweiten Stufe kann ein Hardwarereset, beispielsweise durch kurzfristige Unterbrechung der Spannungsversorgung eines der Funktionskerne 34 oder aller Funktionskerne 34a, 34b erfolgen. In einer dritten Stufe kann eine softwaremäßige Überwachung von Ausgabeergebnissen der Funktionskerne 34 stattfinden, um so auf verschiedenen Ebenen eine erhöhte Ausfallsicherheit bieten zu können.

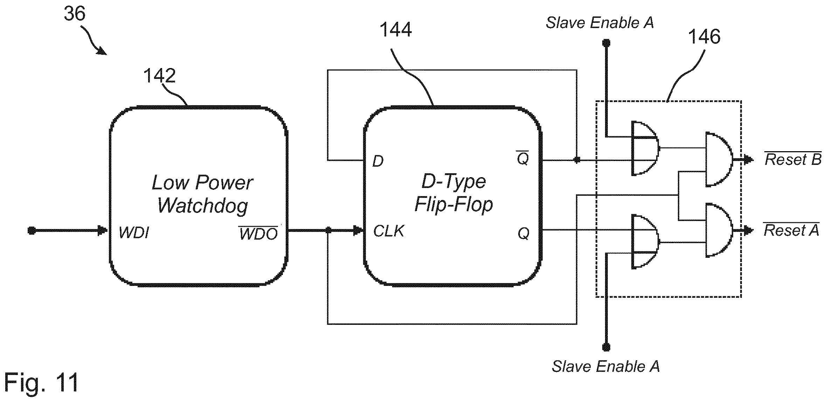

In der Fig. 11 ist schematisch eine sogenannte Toggle-Watchdog-Unit (TWU) als Watchdogeinrichtung 36 des Kleinstsatelliten 10 dargestellt. Dabei wird ein Ausgang eines Funktionskerns 34 überwacht, und sofern dieser nicht innerhalb eines vorgegebenen Zeitrasters ein Aktivitätssignal ausgibt, wird davon ausgegangen, dass der Funktionskern 34 abgestürzt ist. In diesem Fall wird ein Reset beider Funktionskerne 34a, 34b durchgeführt und hiernach die Master-Slave-Konfiguration getauscht, so dass der bisherige Master- als Slave- und der bisherige Slave- als Masterfunktionskern dient. Mit der gleichen Logik wird die Abkopplungseinrichtung132 aktiviert, um die einzelnen Funktionskerne 34a, 34b mit dem Daten- und Energiebus 56 verbinden zu können. Der TWU der Watchdogeinrichtung 36 umfasst dabei eine Watchdogeinheit 142, eine FPGA-Einheit 144 und eine Logikgattereinheit 146 zur Bereitstellung des Umschaltverhaltens. Hierdurch ist es möglich, dass der OBDH sich selbst überwacht und in einem Fehlerfall selbst regeneriert.

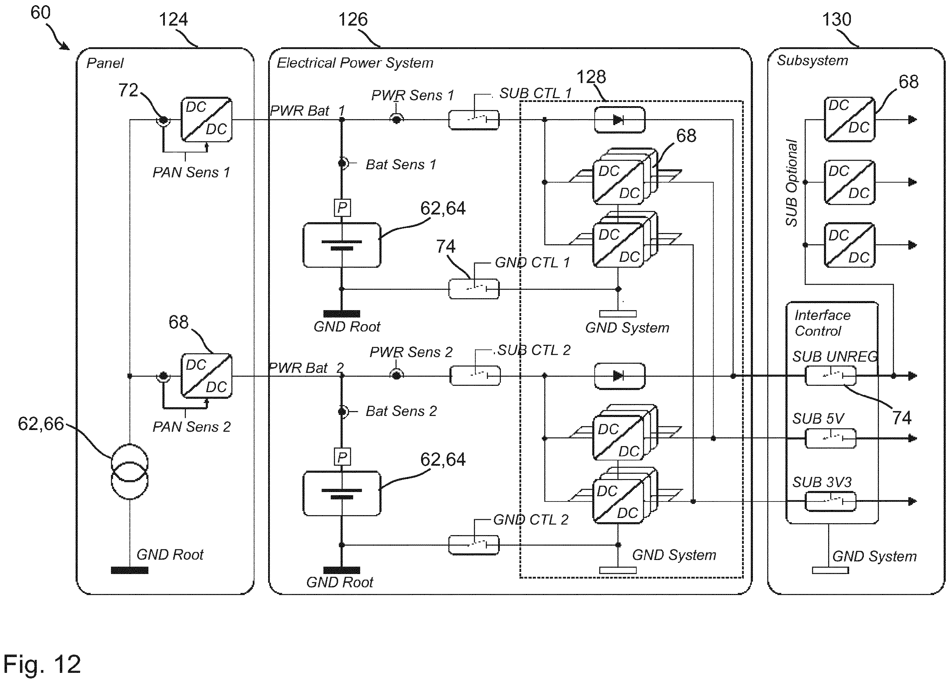

Schließlich ist in Fig. 12 eine Energieversorgungseinrichtung 60 ESP des Kleinstsatelliten 10 dargestellt. Die Energieversorgungseinrichtung 60 umfasst einen Photovoltaik-Energieversorgungsbereich 124, ein Akkumulatoren-Energieversorgungsbereich 126 und einen Energieregelungs-Subbereich 130. Durch die hierdurch aufgeteilte Architektur der Energieversorgungseinrichtung 60 ist es möglich, eine hohe Robustheit der Energieversorgung der einzelnen Funktionskomponenten des Kleinstsatelliten 10 zu erreichen.

Der Photovoltaik-Energieversorgungsbereich 124 umfasst als Stromquelle 62 eine oder mehrere Photovoltaikzellen 66. Über mehrere DC/DC-Spannungswandler 68 wird die Energie der Photovoltaikzellen 66 auf verschiedenen Spannungsstufen bereitgestellt. Hierbei können Energieüberwachungseinrichtungen 72 zum Beispiel Strom- oder Spannungsmonitore 72 die Höhe der von den Photovoltaikzellen 66 gelieferten Energie feststellen. Die elektrische Energie wird an den Akkumulatoren-Energieversorgungsbereich 126 weitergegeben. Darin sind ein, zwei oder mehrere Akkumulatoren 64 umfasst, die auf der ESP-Einschubplatine angeordnet sein können, und über den Strom der Photovoltaikzellen 66 aufgeladen werden können, und beispielsweise im Kernschatten der Erde Energie an die Energieversorgungseinrichtung 60 abgeben können. Es sind Energieschalteinrichtungen 74 vorgesehen, um die Akkumulatoren 64 zu- und abschalten zu können. Über eine Kaskade von Energiewandlern 68 können verschiedene Höhen von Ausgangsspannungen bereitgestellt werden. In diesem Fall umfasst der Energieversorgungsbereich 126 zwei parallel arbeitende Akkumulatoren 64, die sowohl parallel als auch unabhängig voneinander Energie bereitstellen können. Die Energie wird auf drei Spannungsebenen an den Energieregelungssubbereich 130 weitergegeben. Darin sind weitere Energieschalteinrichtungen 74 vorgesehen, die die einzelnen Subsysteme des Kleinstsatelliten speisen. Auch kann von einem einzelnen Spannungsniveau mit weiteren DC/DC-Spannungswandlern 68 andere Spannungsniveaus abgeleitet werden. Somit können verschiedene unabhängig arbeitende Energieversorgungskreise bereitgestellt werden, wobei sowohl auf Energie von den Photovoltaikzellen 66 als auch von den Akkumulatoren 64 zurückgegriffen werden kann. Es werden verschiedene Spannungsniveaus bereitgestellt, so dass unterschiedliche Subsysteme mit unabhängigen und andersartigen Spannungsniveaus versorgt werden können. Durch zahlreiche Energieschalteinrichtungen 74 und Spannungswandlern 68 kann selbst bei Ausfall eines Spannungsniveaus dieses durch Spannungswandlung und Abschalten des betroffenen Energieschaltkreises überbrückt werden. Dadurch ist ein kontinuierlicher Betrieb selbst bei Ausfall eines oder mehrere Akkumulatoren 64 oder Ausfall eines oder mehrerer Photovoltaikzellen 66 oder bei Kurzschluss eines oder mehrerer Funktionselemente des Kleinstsatelliten 10 gegeben.

Ein erfindungsgemäßer Kleinstsatellit kann mit geringen Leistungsreserven eine hohe Lebensdauer erreichen. Dies wird insbesondere durch ein mehrstufiges Energieversorgungskonzept erreicht. Im Bereich der Redundanz und Fehlersicherheit kann auf ein "Majority Voting" verzichtet werden, wobei mittels fortgeschrittener FDIR-Technologie lediglich die Redundanz zweier komplementär arbeitender Systeme ausgenutzt werden kann. Dabei können beispielsweise auch Speicherbereiche in Datenbanken korrigiert oder darin Fehler erkannt werden. In der Laufzeit des Systems kann eine Umschaltung zwischen Master und Slave vorgenommen werden, so dass ohne größere zeitliche Verzögerung eine Umschaltung eines fehlerhaften Systems erfolgen kann, und somit keinerlei Betriebsstörungen im Kleinstsatelliten auftritt. Mithilfe von FDIR-basierenden Watchdogeinrichtungen kann mit einer Anzahl von nur zwei Funktionskernen redundant eine hohe Betriebssicherheit und Strahlungshärte auch ohne konventionelle Abschirmung des Kleinstsatelliten gewährleistet werden, so dass ein geringes Gewicht erzielt werden kann.

Bei einem geringen Volumen und einer geringen Masse und Energie kann ein leistungsfähiges, formationsfähiges Kleinstsatellitensystem bereitgestellt werden. Es wird auf kommerziell verfügbare elektrische Bauteile, die nicht strahlungshart sind, zurückgegriffen. Durch ein neuartiges Antriebssystem mit Lichtbogenantrieb, bei dem Treibstoff in Gehäusestrukturteilen untergebracht werden kann, kann das Antriebssystem minimiert werden. Ein ausgeklügeltes Lageregelungssystem, das mittels Magnetometer, Sonnen- und Sternensensor und Gyroskopen die relative Lage erkennen kann, sowie kombiniert mit dem Antriebssystem, kann in Verbindung mit der erfindungsgemäßen Kollisionsvermeidungseinrichtung eine lange Lebensdauer in einer Orbitalbahn gewährleisten.

Der Kleinstsatellit ist als Baukastensystem ähnlich wie bei dem modularen Baukastensystem im PKW-Bau konzipiert und kann kostengünstig und einfach für unterschiedliche Aufgabenzwecke mit einer Grundkonfiguration bereitgestellt werden. Durch einen hohen Anteil von Gleichteilen können geringe Stückkosten erreicht werden, so dass eine Satellitenplattform vorgeschlagen ist, die eine extrem hohe Lebensdauer, geringe Kosten, und hohe Verwendbarkeit aufweist. Durch die Relativnavigation und die Kollisionsvermeidung kann ein Mehrsatellitensystem ausgebildet sein, das ohne Bodenkontakt autark arbeiten kann, um die gewünschten Aufgaben zu erreichen. Es sind für eine Strahlenabschirmung keine Bleiplatten notwendig und es kann auf Spezialentwicklungen für unterschiedliche Satelliteneinsatzzwecke verzichtet werden.

Das Kleinstsatellitensystem zeichnet sich durch eine Selbstorganisationsfähigkeit und eine hohe Robustheit aus. Durch die Verwendung von industriellen Standards, wie den Energie- und Datenbusstandards können industriell verfügbare Standardkomponenten für miniaturisierte Systeme und Komponenten in schwierigen extraterrestrischen Einsatzumgebungen mit hohen Störniveaus eingesetzt werden. Die modulare Systemarchitektur der einzelnen Komponenten ermöglicht eine flexible Integration und Produktion. Die einzelnen Kleinstsatelliten können automatisiert beispielsweise mithilfe von Robotern produziert werden. Durch automatisierte Tests kann die Funktionalität und die Leistung der Kleinstsatelliten vor dem Start sichergestellt werden.

Somit können kostengünstige verteilte Satellitensysteme für unterschiedliche Einsatzzwecke bereitgestellt werden. Diese können zum Beispiel für die Kartografie, für Positionierungsaufgaben oder für unterschiedliche Aufgaben im IT-Bereich eingesetzt werden. Auch können derartige Kleinstsatellitenformationen für kommerzielle Unternehmen, beispielsweise für ein Flottenmanagement oder ein Fernwartungssystem oder für Regierungsaufgaben, beispielsweise Frühwarnsysteme, Erderkundungen nach Umweltkatastrophen oder militärische Anwendungen genutzt werden. Es handelt sich bei der Satellitenformation um ein hochsicheres und hochminiaturisiertes System, das insbesondere in der Telematik eingesetzt werden kann und beispielsweise im industriellen Umfeld auch zur Ferndiagnose oder Fernreparatur von mobilen und stationären Anlagen eingesetzt werden kann. Mögliche Anwendungsgebiete sind beispielsweise in der Automobilindustrie die Positionierung und autonomes Fahren von Fahrzeugflotten, in der globalen Produktionsautomatisierung und Logistik, insbesondere von mobilen Systemen, im militärischen Bereich Fernsteuerungs- und Positionsbestimmungen und Erdbeobachtungen, in der Forschung und Raumfahrt ergibt sich die Möglichkeit eines kostengünstigen Tests von Innovationen unter Extremstbedingungen, für Datenprovider kann beispielsweise die Analyse der Auslastung von Parkplätzen, von Straßen oder Verkehrssystemen als Indikator für wirtschaftliche Trends genutzt werden oder Wetterdienstleister können mögliche Abnehmer sein.

### Bezugszeichenliste

- 10: Kleinstsatellit
- 12: Gehäuse
- 14: Einschubplatine
- 16: Antriebs- und Lagesystem
- 18: Kollisionsvermeidungsvorrichtung
- 20: Körperortungseinrichtung
- 22: Kollisionsprädiktionseinrichtung
- 24: Ausweicheinrichtung
- 26: Kollisionsschlauch
- 28: Stabilisierungselement
- 30: Flugkörper
- 32: Fremdkörperschlauch
- 34: Funktionskern
- 36: Watchdogeinrichtung
- 38: Magnetfeldspule
- 40: Reaktionsrad
- 42: Gehäuse
- 44: Gehäuserahmen, Gehäuseträger
- 46: Gehäusewand
- 48: Grundplatine
- 50: FEEP-Antrieb
- 52: Eckbereich des Gehäuses
- 54: Stecksockel
- 56: Daten- und Energiebus
- 58: Gehäusewandkonnektor
- 60: Stromversorgungseinrichtung
- 62: Stromquelle
- 64: Akkumulator
- 66: Photovoltaikzelle
- 68: Spannungswandler
- 70: Laderegler
- 72: Energieüberwachungseinrichtung
- 74: Energieschalteinrichtung
- 76: Energiesenke
- 78: I/O-Platine
- 80: Steckseite der Grundplatine
- 82: I/O-Interfaceanschluss
- 84: Körpererkennungssensoren
- 86: optischer Sensor
- 88: Antenne
- 100: Formation von Kleinstsatelliten
- 102: Einzelerfassungsbereich
- 104: Schwarmerfassungsbereich
- 106: Erdhorizont
- 108: Erdoberfläche
- 110: Bidirektionaler Austausch der Relativlage und Trajektorie
- 112: Gehäusewand-Ausnehmung
- 114: Steckerleiste
- 116: Magnettorquereinrichtung
- 118: Magnettorquer-Steuereinheit
- 120: Aluminiumkern der Gehäusewand
- 122: Reaktionsrad-Steuereinheit
- 124: Photovoltaik-Energieversorgungsbereich
- 126: Akkumulatoren-- Energieversorgungsbereich
- 128: Spannungsregelungsbereich
- 130: Energieregelungs-Subbereich
- 132: Abkopplungseinrichtung
- 134: Speichereinrichtung
- 136: Zeit- und Taktgebereinrichtung
- 138: Gehäuserückwand-Interface
- 140: Sensor- und/oder Aktuatoreinrichtung
- 142: Watchdogeinheit
- 144: FPGA-Einheit
- 146: Toggle-Logikgattereinheit
- 150: Orbitalbahn
- 152: Pol
- 154: Perlenschnur von Kleinstsatelliten
- 156: Steckkontaktreihe für Stecksockel
- Tₖ: Flugtrajektorie
- Tₖₖ: Trajektorienkorrektur
- T_{S}: Schwarmtrajektorie
- T_{Sk}: Schwarmtrajektorie
- COMM: Kommunikationsplatine
- OBDH: Rechnerplatine
- EPS: Energieversorgungsplatine
- ADCS: Lageregelungsplatine
- SENS: Erdbeobachtungs-Sensorplatine

## Patentansprüche

1. Formationsfähiger Kleinstsatellit (10), nämlich Nano- oder Picosatellit mit einem Massengewicht von 10kg oder weniger, für LEO-Anwendungen, umfassend ein Gehäuse (12) und zumindest eine im Gehäuse (12) angeordnete Einschubplatine (14) mit einer vorbestimmbaren Funktionalität und einem Antriebssystem (16) zur Erzeugung eines gerichteten Impulses im Orbit in Richtung einer Flugtrajektorie T*ₖ*, , wobei der Kleinstsatellit (10) eine selbstständig und autark arbeitende Kollisionsvermeidungsvorrichtung (18) umfasst, die eingerichtet ist, eine Trajektorienkorrektur *Tₖₖ* der Flugtrajektorie *Tₖ* mittels des Antriebssystems (16) vorzunehmen, sofern eine Kollision mit einem aktiven oder passiven Flugkörper (30) erwartbar ist, wobei die selbstständige und autarke Kollisionsvermeidungsvorrichtung (18) eine Körperortungseinrichtung (20) umfasst, die mit Sende- und Empfangssensoren gekoppelt ist, die über eine Kommunikationsverbindung in bidirektionaler Kommunikation mit anderen formationsfähigen Kleinstsatelliten (10) als aktive Flugkörper stehen können, um deren Relativlage und Flugtrajektorie abfragen und verarbeiten zu können, wobei die Körperortungseinrichtung (20) zumindest einen oder mehrere optischen oder funkbasierten Körpererkennungssensoren (84) zur Erfassung einer Relativlage und Relativgeschwindigkeit eines Flugkörpers (30) in Richtung eines kegelförmigen, die Flugtrajektorie *Tₖ* umfassenden Kollisionsschlauchs (26) umfasst, wobei die Kollisionsvermeidungsvorrichtung (18) eine Kollisionsprädiktionseinrichtung (22) zur Bestimmung eines möglichen Kollisionsrisikos im Kollisionsschlauch (26), und eine Ausweicheinrichtung (24) zur Steuerung des Antriebssystems (16) hinsichtlich einer Trajektorienkorrektur *Tₖₖ* unter Verwendung sowohl der abgefragten und verarbeiteten Relativlagen und Flugtrajektorien der anderen formationsfähigen Kleinstsatelliten (10) als auch der erfasstem Relativlagen und Relativgeschwindigkeiten der Flugkörper (30) umfasst, und wobei hinsichtlich der über die Kommunikationsverbindung erreichbaren anderen formationsfähigen Kleinstsatelliten (10) über geschlossene Regelkreise ein selbstorganisiertes Verfahren zur sichere Abstimmung ihrer Bahnen relativ zueinander bereitstellt ist.

2. Formationsfähiger Kleinstsatellit (10) nach Anspruch 1, **dadurch gekennzeichnet, dass** die Körperortungseinrichtung (20) einen minimalen Durchmesser *dₖ* des Kollisionsschlauchs (26) autonom so wählt, dass darin mindestens der Kleinstsatellit (10) umfasst ist, insbesondere so wählt, dass zumindest ein Mehrfaches des Durchmessers des Kleinstsatelliten (10) umfasst ist, und die Kollisionsprädiktionseinrichtung (22) dem Flugkörper (30) ein Fremdkörperschlauch (32) zuordnet, und einen minimalen Durchmesser *d_{f}* des Fremdkörperschlauchs (32) so wählt, dass darin mindestens der Flugkörper (30) umfasst ist, insbesondere so wählt, dass zumindest ein Mehrfaches des Durchmessers des Flugkörpers (30) umfasst ist, wobei bevorzugt ein Öffnungswinkel des Kollisionsschlauchs (26) und/oder des Fremdkörperschlauchs (32) in Abhängigkeit einer Relativgeschwindigkeit zwischen Kleinstsatellit (10) und Flugkörper (30) gewählt wird, und die Ausweicheinrichtung (24) bei Überlappung des Kollisionsschlauchs (26) mit dem Fremdkörperschlauch (32) in einem Überlappungsbereich *A_{kf}* eine Trajektorienkorrektur *Tₖₖ* bestimmt, insbesondere mehrere Trajektorienkorrekturen mit einer Kostenfunktion simuliert und hieraus eine kostenminimale Trajektorienkorrektur *Tₖₖ* bestimmt und das Antriebssystem zur Erreichung der Trajektorienkorrektur *Tₖₖ* steuert.

3. Formationsfähiger Kleinstsatellit (10) nach einem der vorgenannten Ansprüche, **dadurch gekennzeichnet, dass** die Einschubplatine (14) eine Mehrzahl von Funktionskernen (34) zur Bereitstellung einer vorbestimmbaren Funktionalität umfasst, insbesondere eine gerade Anzahl von zumindest zwei oder mehreren vergleichbaren Funktionskernen (34) zur redundanten Bereitstellung der Funktionalität umfasst, wobei eine Watchdogeinrichtung (36) eine korrekte Arbeitsweise der Funktionskerne (34) überwacht, wobei bevorzugt die Watchdogeinrichtung (36) die Funktionalität eines Funktionskerns (34) durch einen Testfunktionsablauf überwacht, und die Watchdogeinrichtung (36) bei Detektion eines Fehlers eine Fehlerbehebungsmaßnahme des einen oder einer Gruppe der Funktionskerne (34) zur kontinuierlichen, unterbrechungsfreien Bereitstellung der Funktionalität auswählt.

4. Formationsfähiger Kleinstsatellit (10) nach Anspruch 3, **dadurch gekennzeichnet, dass** die Watchdogeinrichtung (36) einem FDIR-Algorithmus (Fault-Detection, Fault-Isolation and Recovery Techniques) implementiert, und im Fehlerfall einen Powerreset, eine Umschaltung zwischen den bevorzugt zwei Funktionskernen (34) und/oder einen Softwarereset zumindest eines der Funktionskern (34) durchführt.

5. Formationsfähiger Kleinstsatellit (10) nach einem der vorgenannten Ansprüche, **dadurch gekennzeichnet, dass** das Antriebssystem (16) zumindest ein Reaktionsrad (40) und zumindest zwei Magnetfeldspule (38), bevorzugt ein Reaktionsrad (40) und zumindest drei, insbesondere sechs Magnetfeldspulen (38) einer Magnettorquer-Einrichtung(116) zur kombinierten Lageregelung in eine beliebige Richtung umfasst.

6. Formationsfähiger Kleinstsatellit (10) nach Anspruch 5, **dadurch gekennzeichnet, dass** zumindest zwei aus einer Gruppe von zumindest einem Sternensensor, zumindest einem Sonnensensor, zumindest ein Gyroskop, bevorzugt ein MEMS-Gyroskop und/oder zumindest ein Magnetometer, insbesondere zumindest ein 3D-Magnetometer, ein 3D-Gykroskop, sechs 2-achsige Sonnensensoren und sechs 2-achsige Sternensensoren auf einer Rückseite einer Einschubplatine (14) und/oder auf einer oder mehreren Gehäusewänden (46) angeordnet sind, wobei weiterhin bevorzugt das Reaktionsrad (40) als miniaturisiertes Reaktionsrad zur Korrekturlageregelung auf einer Einsteckplatine (14) angeordnet ist.

7. Formationsfähiger Kleinstsatellit (10) nach einem der vorgenannten Ansprüche, **dadurch gekennzeichnet, dass** das Antriebssystem (16) zumindest einen elektrischen Antrieb, insbesondere einen Lichtbogenantrieb, bevorzugt zumindest einen FEEP-Antrieb (Feld Effekt-Emissionstriebwerk) (50), und insbesondere vier FEEP-Antriebe (50) umfasst, die weiterhin bevorzugt im Kantenbereich oder Eckbereich (52) des bevorzugt kubischen Gehäuses (12), bevorzugt in einem Gehäuserahmen (44) angeordnet ist.

8. Formationsfähiger Kleinstsatellit (10) nach Anspruch 7, **dadurch gekennzeichnet, dass** der Kantenbereich des Gehäuserahmens (44) ein Hohlprofil oder ein Profil mit einer porösen Innenstruktur umfasst, in dem Treibstoff, insbesondere Gallium, Ammoniak oder Hydrazin, für den elektrischen Lichtbogenantrieb gelagert ist.

9. Formationsfähiger Kleinstsatellit (10) nach einem der vorgenannten Ansprüche, **dadurch gekennzeichnet, dass** im Gehäuse (12) ein Gehäuserahmen (44), mehrere Gehäusewände (12) und eine Grundplatine (48) mit zumindest zwei Stecksockeln (54) umfasst sind, wobei in der Grundplatine (48) die Einschubplatine (14) eingesteckt ist und die Einschubplatine (14) in Kommunikation über einen Daten- und Energiebus (56), der zumindest ein, insbesondere mehrere der Kommunikationsprotokollstandards UART, SPI, CAN, Spacewire und / oder I²C unterstützt, mit weiteren Einschubplatinen (14) und / oder dem Antriebssystem (16) und / oder zumindest einer Sensor- und / oder Aktuatoreinrichtung (140) und einer Stromversorgungseinrichtung (60) steht.

10. Formationsfähiger Kleinstsatellit (10) nach Anspruch 9, **dadurch gekennzeichnet, dass** die Grundplatine (48) eine mehrstufige und skalierbare Stromversorgungseinrichtung (60) umfasst, die Energie zumindest einer Photovoltaikzelle (66) und / oder zumindest eines Akkumulators (64) als Stromquelle (62) bereitstellt, wobei eine Mehrzahl von Spannungswandlern (68), Ladereglern (70) und Energieüberwachungs- und Energieschalteinrichtungen (72, 74) umfasst sind, um sowohl eine Energieabgabe der Stromquellen (62) als auch Energieaufnahme von Energiesenken (76), insbesondere von Einschubplatinen (14) oder Antriebssystem (16) zu erfassen, zu verteilen und zu regeln.

11. Formationsfähiger Kleinstsatellit (10) nach Anspruch 9 oder 10, **dadurch gekennzeichnet, dass** die Grundplatine (48) planbar ist und eine I/O-Platine (78) mit zumindest einem analogen und/oder digitalen Interfaceanschluss (82) in die Steckseite (80) der Grundplatine (48) mit einer Mehrzahl von Stecksockeln (54) einsteckbar ist, wobei bevorzugt die Steckseite (80) den Daten- und Energiebus (56) und die Stecksockel (54) umfasst und die Grundplatine seitwärts ausgerichtet zumindest einen Gehäusewandkonnektor (58) zur elektrischen Verbindung mit einer Gehäusewand (46) umfasst.

12. Formationsfähiger Kleinstsatellit (10) nach einem der Ansprüche 9 bis 11, **dadurch gekennzeichnet, dass** die Einschubplatine (14) zumindest eine Kommunikationsplatine (COMM), eine Rechnerplatine (OBDH), eine Energieversorgungsplatine (EPS), und/oder eine Lageregelungsplatine (ADCS) ist und dass zumindest eine Gehäusewand (46) zumindest eine Photovoltaikzelle (66) und / oder zumindest eine Magnetfeldspule (38) und oder zumindest einen optischen Sensor (86) und / oder eine Antenne (88) umfasst, und dass der Gehäuserahmen (44) zumindest Teile des Antriebssystems (16), insbesondere zumindest einen FEEP-Antrieb (50) umfasst.

13. Formation (100) aus mehreren Kleinstsatelliten (10) nach einem der vorhergehenden Ansprüche, **dadurch gekennzeichnet, dass** Relativposition und Flugtrajektorie *Tₖ* jedes Kleinstsatelliten (10) durch die selbstständig und autark arbeitende Kollisionsvermeidungsvorrichtung (18) veränderbar ist.

14. Formation (100) nach Anspruch 13, **dadurch gekennzeichnet, dass** bei Überschreitung einer vorbestimmbaren Abweichung der Flugtrajektorie *Tₖ* eines Kleinstsatelliten (10) durch eine Trajektorienkorrektur *Tₖₖ* von einer Formationstrajektorie *T_{S}* eine Einzeltrajektorienkorrektur *Tₖₖ* des Kleinstsatelliten (10) oder eine Formationstrajektorienkorrektur *T_{Sk}* der weiteren im Formation (100) befindlichen Kleinstsatelliten (10) zur Beibehaltung oder Neuausrichtung der Formationstrajektorie *T_{S}* vornehmbar ist.

## Claims

1. Small satellite (10) capable of flying in formation, i.e. nano-satellite or picosatellite with a mass of 10 kg or less, for LEO applications, comprising a housing (12) and at least one plug-in board (14) arranged in the housing (12) and having a predeterminable functionality and propulsion system (16) for generating a directed pulse in orbit in the direction of a flight trajectory *Tₖ,* wherein the small satellite (10) comprises an independently and autonomously operating collision avoidance system (18) which is equipped to perform a trajectory correction *Tₖₖ* of the flight trajectory *Tₖ* by means of the propulsion system (16) if a collision with an active or passive foreign object (30) can be expected, where the independent and autonomous collision avoidance system (18) comprises an object detection device (20) coupled to transmitting and receiving sensors which can be in bidirectional communication via a communication link with other small satellites (10) capable of flying in formation as active flying objects in order to allow request and processing of their relative attitude and flight trajectory, where the object detection device (20) comprises at least one or more optical or radio-based object detection sensors (84) for acquisition of the relative attitude and relative velocity of a foreign object (30) in the direction of a cone-shaped collision tube (26) enclosing the flight trajectory *Tₖ,* wherein the collision avoidance system (18) comprises a collision prediction device (22) for determining a potential collision risk in the collision tube (26) and an avoidance device (24) for controlling the propulsion system (16) with respect to a trajectory correction *Tₖₖ* using the requested and processed relative attitudes and flight trajectories of the other small satellites (10) capable of flying in formation as well as the acquired relative attitudes and relative velocities of the foreign objects (30), and wherein a self-organizing process is provided by closed control loops with regard to other small satellites (10) capable of formation and contactable via the communication link for safe coordination of their orbits relative to one another.

2. Small satellite (10) capable of flying in formation according to claim 1, **characterized in that** the object detection device (20) autonomously selects a minimum diameter *dₖ* of the collision tube (26) such that at least the small satellite (10) is enclosed therein, and in particular selects it such that at least a multiple of the diameter of the small satellite (10) is enclosed, and the collision prediction device (22) assigns a foreign body tube (32) to the foreign object (30) and selects a minimum diameter *d_{f}* of the foreign body tube (32) such that at least the foreign object (30) is enclosed therein, in particular such that at least a multiple of the diameter of the foreign object (30) is enclosed, wherein preferably an opening angle of the collision tube (26) and/or of the foreign body tube (32) is selected depending on a relative velocity between the small satellite (10) and the foreign object (30), and the avoidance device (24) determines in the event of an overlap of the collision tube (26) with the foreign body tube (32) in an overlap area *A_{kf}* a trajectory correction *Tₖₖ*, and in particular simulates several trajectory corrections, with a cost function, and from this determines a minimum-cost trajectory correction *Tₖₖ* and controls the propulsion system to achieve said trajectory correction *Tₖₖ*.

3. Small satellite (10) capable of flying in formation according to one of the aforementioned claims, **characterized in that** the plug-in board (14) comprises a plurality of functional cores (34) for provision of a predeterminable functionality, in particular an even number of at least two or more comparable functional cores (34) for redundant provision of the functionality, where a watchdog device (36) monitors a correct operation of the functional cores (34), wherein the watchdog device (36) preferably monitors the functionality of a functional core (34) by a test function sequence, and the watchdog device (36) selects, if a fault is detected, a fault rectification measure of one functional core (34) or a group thereof for a continuous and uninterrupted provision of functionality.

4. Small satellite (10) capable of flying in formation according to claim 3, **characterized in that** the watchdog device (36) implements an FDIR (Fault Detection, Isolation and Recovery) algorithm, and in the event of a fault performs a power reset, a switch between the preferably two functional cores (34), and/or a software reset of at least one of the functional cores (34).

5. Small satellite (10) capable of flying in formation according to one of the aforementioned claims, **characterized in that** the propulsion system (16) comprises at least one reaction wheel (40) and at least two magnetic field coils (38), preferably one reaction wheel (40) and at least three and in particular six magnetic field coils (38) of a magnetorquer device (116), for combined attitude control in any direction.

6. Small satellite (10) capable of flying in formation according to claim 5, **characterized in that** at least two from a group of at least one star sensor, at least one sun sensor, at least one gyroscope, preferably an MEMS gyroscope, and/or at least one magnetometer, in particular at least one 3D magnetometer, one 3D gyroscope, six 2-axis sun sensors and six 2-axis star sensors, are arranged on a rear face of a plug-in board (14) and/or on one or more housing walls (46), wherein the reaction wheel (40) is preferably arranged on a plug-in board (14) as a miniaturized reaction wheel for attitude control correction.

7. Small satellite (10) capable of flying in formation according to one of the aforementioned claims, **characterized in that** the propulsion system (16) comprises at least one electric propulsion unit, in particular an arc jet propulsion unit, preferably at least one FEEP (Field Emission Electric Propulsion) unit (50), and in particular four FEEP units (50) which are furthermore preferably arranged in the edge area or corner area (52) of the preferably cubic housing (12), preferably in a housing frame (44).

8. Small satellite (10) capable of flying in formation according to claim 7, **characterized in that** the edge area of the housing frame (44) comprises a hollow section or a section with a porous internal structure in which fuel, in particular gallium, ammoniac or hydrazine, is stored for the electric arc jet propulsion unit.

9. Small satellite (10) capable of flying in formation according to one of the aforementioned claims, **characterized in that** a housing frame (44), several housing walls (12) and a motherboard (48) with at least two plug-in sockets (54) are comprised in the housing (12), wherein the plug-in board (14) is inserted into the motherboard (48) and the plug-in board (14) is in communication via a data and power bus (56), which supports at least one, in particular several of the communication protocol standards UART, SPI, CAN, SpaceWire and/or I²C, with further plug-in boards (14) and/or with the propulsion system (16) and/or with at least one sensor and/or actuator device (140) and with a power supply device (60).

10. Small satellite (10) capable of flying in formation according to claim 9, **characterized in that** the motherboard (48) comprises a multi-level and scalable power supply device (60) which provides energy from at least one photovoltaic cell (66) and/or from at least one battery (64) as the energy source (62), wherein a plurality of voltage converters (68), charge controllers (70) and energy monitoring and energy switching devices (72, 74) are comprised in order to detect, distribute and control both energy output from energy sources (62) and energy consumption by energy sinks (76), in particular by plug-in boards (14) or the propulsion system (16).

11. Small satellite (10) capable of flying in formation according to claim 9 or 10, **characterized in that** the motherboard (48) is planar and an I/O board (78) with at least one analog and/or digital interface port (82) is insertable into the mating side (80) of the motherboard (48) with a plurality of plug-in sockets (54), wherein the mating side (80) preferably comprises the data and power bus (56) and the plug-in sockets (54), and the motherboard comprises in the lateral alignment at least one housing wall connector (58) for electrical connection to a housing wall (46).

12. Small satellite (10) capable of flying in formation according to one of claims 9 to 11, **characterized in that** the plug-in board (14) is at least a communication board (COMM), a computer board (OBDH), a power supply board (EPS), and/or an Attitude Determination and Control System (ADCS) board, that at least one housing wall (46) comprises at least one photovoltaic cell (66) and/or at least one magnetic field coil (38) and/or at least one optical sensor (86) and/or one antenna (88), and that the housing frame (44) comprises at least parts of the propulsion system (16), in particular at least one FEEP propulsion unit (50).

13. Formation (100) of several small satellites (10) according to one of the preceding claims, **characterized in that** the relative attitude and flight trajectory *Tₖ* of each small satellite (10) is modifiable by the independently and autonomously operating collision avoidance system (18).

14. Formation (100) according to claim 13, **characterized in that** when a predeterminable deviation of the flight trajectory *Tₖ* of a small satellite (10) is exceeded, an individual trajectory correction *Tₖₖ* of the small satellite (10) or a formation trajectory correction *T_{Sk}* of the other small satellites (10) located in the formation (100) is performable by a trajectory correction *Tₖₖ* of a formation trajectory *T_{S}* to maintain or realign the formation trajectory *T_{S}*.

## Revendications

1. Petit satellite capable de voler en formation (10), notamment nanosatellite ou picosatellite ayant une masse de 10 kg ou moins, pour des applications en orbite basse (LEO), comprenant un carter (12) et au moins un circuit imprimé enfichable (14) avec une fonctionnalité prédéterminable et un système de propulsion (16) pour créer une impulsion dirigée dans l'orbite en direction d'une trajectoire de vol *Tₖ,* sachant que le petit satellite (10) comprend un système de prévention de collisions (18) fonctionnant de manière autonome et autarcique qui est configuré pour procéder à une correction *Tₖₖ* de la trajectoire de vol *Tₖ* au moyen du système de propulsion (16) dans la mesure où une collision peut être attendue avec un objet volant (30) actif ou passif, sachant que le système de prévention de collisions (18) fonctionnant de manière autonome et autarcique comprend un dispositif de localisation d'objets (20) qui est accouplé à des capteurs émetteurs et récepteurs qui peuvent, via une liaison de communication, communiquer de manière bidirectionnelle avec d'autres petits satellites capables de voler en formation (10) comme corps volants actifs pour pouvoir demander et traiter leur emplacement relatif et leur trajectoire de vol, sachant que le dispositif de localisation d'objets (20) comprend au moins un ou plusieurs capteurs de détection d'objet (84) optiques ou radiofréquence pour détecter la position relative et la vitesse relative d'un objet volant (30) en direction d'un tube de collision (26) conique, comprenant la trajectoire de vol *Tₖ,* sachant que le système de prévention de collisions (18) comprend un dispositif de prédiction de collision (22) pour déterminer un risque de collision possible dans le tube de collision (26), et un dispositif d'évitement (24) pour commander le système de propulsion (16) concernant une correction de trajectoire *Tₖₖ* en utilisant aussi bien les positions relatives et trajectoires de vol des autres petits satellites (10) capables de voler en formation, demandées et traitées que les positions relatives et vitesses relatives acquises des objets volants (30), et sachant que concernant les autres petits satellites (10) capables de voler en formation, joignables via la liaison de communication, un procédé auto-organisé pour une coordination fiable de leur trajectoire les uns par rapport aux autres est fourni au moyen de boucles de régulation fermées.

2. Petit satellite capable de voler en formation (10) selon la revendication 1, **caractérisé en ce que** le dispositif de localisation d'objets (20) choisit de manière autonome un diamètre minimal *dₖ* du tube de collision (26), qu'au moins le petit satellite (10) est compris dedans, et choisit notamment de telle sorte qu'au moins un multiple du diamètre du petit satellite (10) est compris, et que le dispositif de prédiction de collision (22) attribut un tube d'objet étranger (32) à l'objet volant (30), et choisit un diamètre minimal *d_{f}* du tube d'objet étranger (32) de telle sorte qu'au moins l'objet volant (30) est compris dedans, et choisit notamment de telle sorte qu'au moins un multiple du diamètre de l'objet volant (30) est compris, sachant que de préférence, un angle d'ouverture du tube de collision (26) et/ou du tube d'objet étranger (32) est choisi en fonction d'une vitesse relative entre le petit satellite (10) et l'objet volant (30), et qu'en cas de chevauchement du tube de collision (26) avec le tube de corps étranger (32) dans une zone de chevauchement *A_{kf},* le dispositif d'évitement (24) détermine une correction de trajectoire *Tₖₖ*, notamment simule plusieurs corrections de trajectoire avec une fonction coût et en déduit une correction de trajectoire *Tₖₖ* au coût minimal et commande le système de propulsion pour atteindre la correction de trajectoire *Tₖₖ*.

3. Petit satellite capable de voler en formation (10) selon une des revendications précédentes, **caractérisé en ce que** le circuit imprimé enfichable (14) comprend une pluralité de cœurs fonctionnels (34) pour fournir une fonctionnalité prédéterminable, notamment un nombre pair d'au moins deux ou plusieurs cœurs fonctionnels (34) comparables pour la fourniture redondante de la fonctionnalité, sachant qu'un dispositif watch dog (36) surveille le bon fonctionnement des cœurs fonctionnels (34), sachant que de préférence, le dispositif watch dog (36) surveille la fonctionnalité du cœur fonctionnel (34) au moyen d'un test de fonctionnement, et qu'en cas de détection d'une erreur, le dispositif watch dog (36) sélectionne une mesure de correction d'erreur d'un ou d'un groupe de cœurs fonctionnels (34) pour la fourniture continue et sans interruption de la fonctionnalité.

4. Petit satellite capable de voler en formation (10) selon la revendication 3, **caractérisé en ce que** le dispositif watch dog (36) implémente un algorithme FDIR (Fault-Detection, Fault-Isolation and Recovery Techniques) et exécute, en cas d'erreur, une réinitialisation de l'alimentation, une commutation entre de préférence deux cœurs fonctionnels (34) et/ou une réinitialisation du logiciel au moins d'un desdits cœurs fonctionnels (34).

5. Petit satellite capable de voler en formation (10) selon une des revendications précédentes, **caractérisé en ce que** le système de propulsion (16) comprend au moins une roue de réaction (40) et au moins deux bobines à champ magnétique (38), de préférence une roue de réaction (40) et au moins trois, notamment six bobines à champ magnétique (38) d'un dispositif magnéto-coupleur (116) pour la régulation combinée de la position dans une direction quelconque.

6. Petit satellite capable de voler en formation (10) selon la revendication 5, **caractérisé en ce qu'**au moins deux appareils d'un groupe comprenant au moins un capteur d'étoiles, au moins un capteur de soleil, au moins un gyroscope, de préférence un gyroscope MEMS et/ou au moins un magnétomètre, notamment au moins un magnétomètre 3D, un gyroscope 3D, six capteurs de soleil à 2 axes et six capteurs d'étoiles à 2 axes, sont disposés au dos d'un circuit imprimé enfichable (14) et/ou sur une ou plusieurs parois du carter (46), sachant que de préférence, la roue de réaction (40) est disposée sur un circuit imprimé enfichable (14) comme roue de réaction miniaturisée pour la régulation de la position de correction.

7. Petit satellite capable de voler en formation (10) selon une des revendications précédentes, **caractérisé en ce que** le système de propulsion (16) comprend au moins un propulseur électrique, notamment un arcjet, de préférence au moins un propulseur à émission de champ (FEEP) (50), et notamment quatre propulseurs FEEP (50) qui sont disposés de préférence dans la zone d'arête ou d'angle (52) du carter de préférence de forme cubique (12), de préférence dans un cadre de carter (44).

8. Petit satellite capable de voler en formation (10) selon la revendication 7, **caractérisé en ce que** la zone d'arête du cadre du carter (44) comprend un profil creux ou un profil avec une structure intérieure poreuse dans laquelle le carburant, notamment du gallium, de l'ammoniaque ou de l'hydrazine, est stocké pour l'arcjet.

9. Petit satellite capable de voler en formation (10) selon une des revendications précédentes, **caractérisé en ce que** dans le carter (12) sont compris un cadre de carter (44), plusieurs parois de carter (12) et un circuit imprimé principal (48) avec au moins deux socles à fiches (54), sachant que dans le circuit imprimé principal (48) est inséré le circuit imprimé enfichable (14) et que le circuit imprimé enfichable (14) communique, via un bus de données et d'énergie (56) qui prend en charge au moins un, notamment plusieurs des protocoles de communication UART, SPI, CAN, Spacewire et/ou I²C, avec d'autres circuits imprimés enfichables (14) et/ou le système de propulsion (16) et/ou au moins un dispositif à capteur et/ou actionneur (140) et un dispositif d'alimentation électrique (60).

10. Petit satellite capable de voler en formation (10) selon la revendication 9, **caractérisé en ce que** le circuit imprimé principal (48) comprend un dispositif d'alimentation électrique (60) à plusieurs niveaux et évolutif qui fournit l'électricité d'au moins une cellule photovoltaïque (66) et/ou d'au moins un accumulateur (64) comme source de courant (62), sachant qu'est comprise une pluralité de transformateurs de tension (68), régulateurs de charge (70) et dispositifs de surveillance d'énergie et de commutation d'énergie (72, 74) pour acquérir, distribuer et réguler aussi bien une émission d'énergie des sources de courant (62) qu'une absorption d'énergie par des puits d'énergie (76), notamment des circuits imprimés enfichables (14) ou le système de propulsion (16).

11. Petit satellite capable de voler en formation (10) selon la revendication 9 ou 10, **caractérisé en ce que** le circuit imprimé principal (48) est planifiable ou qu'un circuit E/S (78) avec au moins un raccord d'interface (82) analogique et/ou numérique est enfichable dans la partie à fiches (80) du circuit imprimé principal (48) avec une pluralité de socles à fiches (54), sachant que de préférence, le côté à fiches (80) comprend le bus de données et d'énergie (56) et les socles à fiches (54) et que le circuit imprimé principal, orienté latéralement comprend au moins un connecteur sur la paroi du carter (58) pour le raccordement électrique à une paroi du carter (46).

12. Petit satellite capable de voler en formation (10) selon une des revendications 9 à 11, **caractérisé en ce que** le circuit imprimé enfichable (14) est au moins un circuit de communication (COMM), un circuit d'ordinateur (OBDH), un circuit d'alimentation en énergie (EPS) et/ou un circuit de régulation de la position (ADCS) et qu'au moins une paroi du carter (46) comprend au moins une cellule photovoltaïque (66) et/ou au moins une bobine à champ magnétique (38) et au moins un capteur optique (86) et/ou une antenne (88), et que le cadre du carter (44) comprend au moins des parties du système de propulsion (16), notamment au moins un propulseur FEEP (50).

13. Formation (100) composée de plusieurs petits satellites (10) selon une des revendications précédentes, **caractérisée en ce que** la position relative et la trajectoire de vol *Tₖ* de chaque petit satellite (10) est modifiable au moyen du dispositif d'évitement de collision (18) fonctionnant de manière autonome et autarcique.

14. Formation (100) selon la revendication 13, **caractérisée en ce qu'**en cas de dépassement d'un écart prédéterminable de la trajectoire de vol *Tₖ* d'un petit satellite (10) au moyen d'une correction *Tₖₖ* d'une trajectoire de formation *T_{S}*, une correction de trajectoire individuelle *Tₖₖ* du petit satellite (10) ou une correction de trajectoire de formation *T_{Sk}* des autres petits satellites (10) se trouvant en formation (100) est réalisable pour conserver ou réorienter la trajectoire de formation *T_{S}*.
